# EUROPÄISCHE PATENTSCHRIFT

(11) **EP 1 561 847 B1**
(45) Veröffentlichungstag und Bekanntmachung des Hinweises auf die Patenterteilung: **25.07.2007**
(21) Anmeldenummer: 05000994.3
(22) Anmeldetag: 19.01.2005
(51) Int. Cl.: D04H 1/70, D04H 1/64, D04H 3/02, D04H 5/08, D04H 3/12, D04H 5/04

(54) **Verfahren und Vorrichtung zur Herstellung von bahnen- oder plattenförmigen Dämmstoffen aus Mineralfasern**
Method and apparatus for manufacturing insulating webs or plates from mineral fibers
Procédé et dispositif pour la fabrication de matériaux isolants en feuilles ou plaques à base de fibres minérales

(30) Priorität: 21.01.2004 DE 102004003250; 19.01.2005 DE 102005002649
(43) Veröffentlichungstag der Anmeldung: 10.08.2005
(73) Patentinhaber: Deutsche Rockwool Mineralwoll GmbH & Co. OHG, 45966 Gladbeck (DE)
(72) Erfinder: Klose, Gerd-Rüdiger, Dr.-Ing., 46286 Dorsten (DE); Nowack, Peter, 45879 Gelsenkirchen (DE)
(74) Vertreter: Wanischeck-Bergmann, Axel

(56) Entgegenhaltungen:
- WO-A-92/10602
- DE-A1- 19 860 040
- US-A- 4 567 078

## Beschreibung

Die Erfindung betrifft ein Verfahren zur Herstellung von bahnen- oder plattenförmigen Dämmstoffen aus Mineralfasem, vorzugsweise aus mit Bindemitteln gebundener Steinwolle, bei dem eine silikatische Schmelze in einem Schmelzaggregat hergestellt und in einer Zerfaserungseinrichtung zu insbesondere mikrofeinen Mineralfasem zerfasert wird, anschließend die Mineralfasern, vorzugsweise unter Hinzufügung eines Binde- und/oder Imprägnierungsmittels, auf einer Fördereinrichtung als Mineralfaserbahn abgelegt werden, die Mineralfaserbahn sodann formgebend bearbeitet und schließlich einem Härteofen zugeführt wird. Ferner betrifft die Erfindung eine Vorrichtung zur Herstellung von bahnen- oder plattenförmigen Dämmstoffen aus Mineralfasern, vorzugsweise aus mit Bindemitteln gebundener Steinwolle, mit einem Schmelzaggregat, einer Zerfaserungseinrichtung, einer Fördereinrichtung und einem Härteofen, wobei in dem Schmelzaggregat eine silikatische Schmelze hergestellt wird, die in der Zerfaserungseinrichtung zu insbesondere mikrofeinen Mineralfasem zerfasert wird, wobei die Mineralfasem anschließend, vorzugsweise unter Hinzufügung eines Binde- und/oder Imprägnierungsmittels, auf der Fördereinrichtung als Mineralfaserbahn abgelegt werden, die Mineralfaserbahn sodann formgebend bearbeitet und schließlich einem Härteofen zugeführt wird. Schließlich betrifft die Erfindung ein Dämmstoffelement, insbesondere eine wickelbare Mineralfaserbahn, bestehend aus zumindest mit Bindemitteln gebundenen Mineralfasern, vorzugsweise aus Steinwolle sowie ein Dämmstoffelement, insbesondere ein Primärvlies, bestehend aus zumindest mit Bindemitteln gebundenen Mineralfasern, vorzugsweise aus Steinwolle, mit zwei großen Oberflächen und rechtwinklig dazu ausgerichteten Seitenflächen, wobei die Mineralfasem einen Verlauf im wesentlichen parallel zu den großen Oberflächen aufweisen.

Aus dem Stand der Technik sind Dämmstoffe aus Mineralfasem bekannt. Es werden insbesondere Dämmstoffe aus Glaswolle und Steinwolle unterschieden. Sowohl Dämmstoffe aus Glaswolle, als auch Dämmstoffe aus Steinwolle bestehen aus glasig erstarrten Mineralfasem, die zur Verbindung in der Regel organische Bindemittel und zur Hydrophobierung und Staubbindung vorzugsweise Mineralöle enthalten.

Die glasig erstarrten Mineralfasern der Dämmstoffe aus Steinwolle werde aus silikatischen Schmelzen gebildet und sind relativ kurz. Die verwendeten Schmelzen enthalten große Anteile Erdalkalien. Die Viskosität einer solchen Schmelze ist daher von der Temperatur der Schmelze abhängig, wobei die Viskosität mit zunehmender Temperatur der Schmelze steil ansteigt. Weiterhin ist die Schmelze außerordentlich keimbildungsfreudig und kristallisiert anschließend sehr schnell aus. Der Umformbereich ist somit sehr eng.

Die Mineralfasern werden üblicherweise auf sogenannten, beispielsweise in der WO 01/23314 A1 oder der EP 0 825 966 A1 beschriebenen Kaskaden-Zerfaser ungsmaschinen hergestellt. Aus dem Stand der Technik sind ferner Einrad-Zerfaserungsmaschinen bekannt, die aber inzwischen als völlig unwirtschaftlich gelten. Weiterhin ist ein Düsen-Blas-Verfahren bekannt, bei dem die Schmelze aus mehreren Düsen unterhalb eines Schmelzwannenbodens ausläuft und anschließend zu Mineralfasem verblasen wird.

Die als besonders leistungsfähig geltenden Kaskaden-Zerfaserungsmaschinen weisen einen breiten Belastungsbereich auf und sind zumeist mit vier walzenför migen Hohlkörpern ausgerüstet, die versetzt untereinander angeordnet sind. Die walzenförmigen Hohlkörper rotieren um ihre horizontal ausgerichtete Achse mit hohen, von Stufe zu Stufe steigenden Umfangsgeschwindigkeiten, wobei die Drehrichtung von Hohlkörper zu Hohlkörper wechselt.

In einem nicht mit der Schmelze beaufschlagten Umfangsbereich der unteren drei, als vornehmlich faserbildend betrachteten walzenförmigen Hohlkörper sind Düsen angeordnet, aus denen Luft mit Geschwindigkeiten von ca. 30 bis ca. 170 m/s, vorzugsweise ca. 70 bis 120 m/s ausströmt. Die Haupt-Strömungsrichtung kann parallel zur Antriebsachse der walzenförmigen Hohlkörper oder in einem hiervon abweichenden Winkel dazu ausgerichtet sein. Die silikatische Schmelze wird auf den ersten walzenförmigen Hohlkörper geleitet, der nur eine Verteilungsfunktion haben soll, so dass ein schmaler Strahl der Schmelze in ein breites Band umgeformt und dieses Band auf den nächsten walzenförmigen Hohlkörper weitergeleitet wird. Bei einem großen Massenzufluss der Schmelze ist es aber dennoch erforderlich, dass auch der erste walzenförmigen Hohlkörper mit einer hohen Umdrehung angetrieben wird, so dass es bereits im Bereich des ersten (oberen) walzenförmigen Hohlkörper zu einer wenngleich auch unerwünschten Bildung von Mineralfasem kommt.

Aus der auf die walzenförmigen Hohlkörper auftreffenden Schmelze lösen sich unter Einwirkung der Zentrifugalkräfte Teile heraus, die entweder zu Mineralfasem ausgezogen werden oder die für die Herstellung von Dämmstoffen aus Mineralfasem unerwünschte kugelförmige Körper bilden. Diese Körper werden von der tangential über die walzenförmigen Hohlkörper strömende, stark verwirbelte Luft in eine, sich an die Kaskaden-Zerfaserungsmaschine anschließende Sammelkammer transportiert. Die kurzzeitig noch verformungsfähigen Mineralfasem werden dabei verkrümmt oder in sich verdreht. Die Herstellung langer und glatter Fasern ist unter diesen Strömungsbedingungen und wegen des ohnehin sehr kurzen Verarbeitungsbereichs der Schmelze nicht möglich.

Wie bereits voranstehend erwähnt, werden die Mineralfasem mit Bindemittel gebunden um eine Mineralfaserbahn zu bilden. Das in Wasser gelöste Bindemittel wird üblicherweise durch die hohle Achse des walzenförmigen Hohlkörpers und/oder durch an dessen Umfangsfläche angeordnete Düsen in die Masse aus Mineralfasern gesprüht. Hierbei durchqueren die Mineralfasern den Sprühbereich. Das Bindemittel besteht üblicherweise aus einer Mischung von duroplastisch aushärtenden Phenol-, Formaldehyd-, Harnstoffharzen, deren Monomere in wasser löslicher Form vorliegen. Das im Bindemittel enthaltene Wasser verdampft explosionsartig, so dass das Bindemittel in feinste Tröpfchen dispergiert wird. Gleichzeitig wird der Umgebung die notwendige Verdampfungsenergie entzogen, so dass sowohl die gebildeten Mineralfasem als auch die kugelförmigen Körper so rasch abkühlen, dass sie glasig erstarren.

Mit dem Wasser wird dem Verfahren zur Herstellung von Mineralfasem für die Dämmstoffproduktion auch das zur Hydrophobierung der Mineralfasem bzw. der daraus gebildeten Mineralfaserbahn und zur Staubbindung eingesetzte hochsiedende Mineralöl zugeführt und auf die gleiche Weise dispergiert, wie das Bindemittel, wobei der entstehende Wasserdampf eine Verbrennung verhindert.

Die eingesetzten Bindemittelmengen sind im übrigen sehr gering; ihre Anteile in den verschiedenen Dämmstoffen aus Steinwolle betragen nur ca. 1 bis ca. 4,5 Masse-%. Diese geringe Mengen sind aber nicht ausreichend, um alle Mineralfasem zumindest punktförmig miteinander zu verbinden. Andererseits können die Bindemittelgehalte auch nicht wesentlich gesteigert werden, um den Charakter als nichtbrennbare und zugleich elastisch-federnde Dämmstoffe zu erhalten. Die ohnehin zu geringen Mengen müssen somit möglicht gleichmäßig in der Mineralfasermasse und der daraus gebildeten Mineralfaserbahn verteilt sein.

In der Mineralfasermasse sind 0,1 bis ca. 0,3, zumeist jedoch ca. 0,2 Masse-% Hydrophobiermittel vorgesehen. Die sich auf den Oberflächen der Mineralfasern bildenden Filme aus Bindemitteln und/oder Hydrophobiermittel weisen Schichtdicken im Nanometerbereich auf, was für die beabsichtigte Wirkung völlig ausreichend ist.

In der einen geschlossenen, weitgehend von allen Seiten umströmten Antrieb aufweisenden Kaskaden-Zerfaserungsmaschine entstehen starke Luftwirbel, wobei die Strömungsgeschwindigkeiten im Bereich der Zerfaserungswalzen deutlich variieren.. Die gebildeten Mineralfasem werden durch diese Luftwirbel weder gleichmäßig verteilt in die Sammelkammer gefördert, noch gleichmäßig mit den Bindemitteltröpfchen bzw. Aerosolen benetzt. Die stärker mit den unausgehärteten klebfähigen Bindemitteln imprägnierten Mineralfasern bilden innerhalb weniger Millisekunden Agglomerationen, wobei die in sich verkrümmten Formen der kurzen Mineralfasern die Bildung und den Zusammenhalt von Agglomerationen begünstigen. An diese Agglomerationen können sich auch Mineralfasern mit weniger oder keinen Bindemittel-Anhaftungen anlagern. Die Agglomerationen sind aber größenmäßig begrenzt, wobei die Agglomerationen bei Überschreiten einer maximalen Größen auseinanderfallen und als Flocken im Luftstrom transportiert werden. Die Flocken weisen sowohl in sich und auch untereinander unterschiedliche Bindemittelanteile auf, wobei auch Flocken ohne Bindemittel oder Flocken mit bereits durch eine ungenügende Kühlung ausreagierten und demzufolge unklebrigen Bindemittelanteilen entstehen können. Diese bilden sich bevorzugt in den Bereichen der in den meisten Fällen aerodynamisch ungünstig geformten Sammelkammer, in denen die Strömungsgeschwindigkeit sehr stark abfällt oder in denen sogar rückwärts gerichtete Luftströmungen auftreten.

Die Flocken und die singulären gröberen nichtfaserigen Partikel werden in Richtung einer am Ende der Sammelkammer angeordneten luftdurchlässigen Fördereinrichtung gesaugt. Die Fördereinrichtung kann als zumindest ein luftdurchlässiges Förderband und/oder eine einen luftdurchlässigen Mantel aufweisende rotierende Trommel ausgebildet sein. Die erforderliche Transportluft wird mit einer mittleren Geschwindigkeit von ca. 3 bis 7 m/s durch das luftdurchlässige Förderband bzw. den luftdurchlässigen Mantel der rotierenden Trommel und durch eine auf das Förderband oder den Mantel abgelegte, als Primärvlies bezeichnete Mineralfaserbahn gesaugt.

Durch die Art der Strömungsführung und die Anordnung der aufsammelnden Fördereinrichtung(en) erfolgt zwischen der Kaskaden-Zerfaserungsmaschine und der Fördereinrichtung eine Windsichtung, wodurch die gröberen nichtfaserigen Partikel nach unten fallen und ausgeschieden werden, während die Mineralfasem auf der Fördereinrichtung abgelegt werden. Der Abscheidungsgrad der nichtfaserigen Partikel ist abhängig von den mittleren aerodynamischen Durchmessern der Flocken. In der Regel kann der größte Teil der nichtfaserigen Partikel mit einem Durchmesser und/oder eine Länge > ca. 0,25 mm abgetrennt werden, so dass in der Mineralfasermasse nicht mehr als ca. 30 % nichtfaserige Partikel mit geringeren Durchmessern verbleiben. Auf diese Weise werden auch größere Mineralfasern und entsprechend schwere Mineralfaser-Perlen-Agglomerationen abgeschieden.

Die unter der Wirkung der strömenden Luft im Flug gebildeten Flocken sind in Strömungsrichtung deutlich länger als quer zur Strömungsrichtung. Auch die einzelnen Mineralfasem sind überwiegend in Richtung der formgebenden Hauptströmungsrichtung orientiert. Diese starke Orientierung gilt nicht in demselben Maße für Flocken aus bindemittelfreien Mineralfasern. Diese wegen ihres geringeren Gewichts und ihrer schleierartigen Form häufig mit geringerer Geschwindigkeit im oberen Bereich des Massenstroms der Mineralfasern bewegten Agglomerationen werden demzufolge auch bevorzugt auf der Oberseite des Primärvlieses abgelegt.

In dem abgelegten Primärvlies bleiben die ursprünglichen Orientierungen der Flocken weitgehend erhalten. Das gilt auch für den Fall, dass zwei oder drei Zerfaserungsvorrichtungen auf eine Sammelkammer geschaltet sind.

Um trotz des Einsatzes minimierter Kühlwassermengen eine vorzeitige Aushärtung der Bindemittel in der Sammelkammer bzw. durch die Restwärme der Mineralfasem oder nichtfaserigen Bestandteile zu verhindern und eine weitgehend gleichmäßige Dämmstoffstruktur zu erreichen, werden die Primärvliese gemäß der WO 01/23314 A1 mit möglichst geringen Flächengewichten von ca. 100 bis 750 g/m², häufig mit 200 bis 350 g/m² abgezogen. Die Dichte dieses Primärvlieses variiert dabei zwischen ca. 5 - ca. 12 kg/m³. Wegen der instabilen Strömungsverhältnisse in der Sammelkammer bilden diese Primärvliese häufig keine in sich geschlossenen Mineralfaserbahnen.

Zur Herstellung von Dämmstoffen mit marktüblichen Materialstärken, wird das dünne Primärvlies mit Hilfe einer der Sammelkammer nachgeschalteten Pendelvorrichtung quer zur ursprünglichen Förderrichtung mäandrierend auf einem nachgeschalteten, langsam laufenden Förderer abgelegt. Einzelne Lage des abgelegten Primärvlieses werden dadurch versetzt übereinander liegend, abgelegt und bilden eine als Sekundärvlies bezeichnete endlose Mineralfaserbahn. Zur Herstellung eines nur 100 mm dicken Dämmstoffs mit der Rohdichte 20 kg/m³ müssen bereits etwa sechs Primärvlieslagen zu je 350 g/m² übereinander gelegt werden.

Die schnellen Pendelbewegungen der Pendelvorrichtungen und die erforderlichen Umlenkungen führen zu Zugbeanspruchungen im Primärvlies, welches wegen der Ausrichtung der Flocken, bzw. der Mineralfasem in Förderrichtung deutlich zugfester ist, als quer zur Förderrichtung. Das Primärvlies wird ferner beim Durchlauf durch die Pendelvorrichtung geringfügig komprimiert. Eine weitere Erhöhung der Rohdichte tritt durch das Übereinanderlegen der Primärvliese auf der Fördereinrichtung ein.

In der Seitenansicht der Faserbahn zeichnen sich die Grenzflächen der Primärvliesbahnen deutlich ab. Entlang dieser Grenzflächen kann sie auch ohne weiteres wieder getrennt werden. Das wird u.a. dadurch erleichtert, dass die Fasern in den Grenzflächen der Primärvliese komprimiert und flach gelagert sind, wenig oder gar keine Bindemittel mehr vorhanden oder noch reaktiv sind. Insbesondere die ungebundenen Fasern stellen regelrechte Trennflächen dar.

Hieraus resultieren im Primärvlies geschwächte Bereiche mit einer verringerten Querzugfestigkeit rechtwinklig zu den großen Oberflächen der Mineralfaserbahn bzw. der daraus hergestellten Dämmstoffe. Diese geschwächten Bereiche wirken sich gleichermaßen negativ beim Aufrollen kompressibler Dämmfilze aus, da in diesen Grenzflächen bildenden Bereichen regelmäßig Risse auftreten. Die Orientierung der Mineralfasem in den übereinander angeordneten, das Sekundärvlies bildenden Primärvlieslagen führt bei den hieraus hergestellten Dämmstoffen zu einer Zugfestigkeit quer zur Produktionsrichtung, die deutlich höher ist, als die Zugfestigkeit in Produktionsrichtung.

Aufwickelbare Dämmfilze aus Steinwolle mit Produktionsanlagen hergestellt, die Sammelkammern mit deutlich erhöhten Produktionsbreiten von ca. 3 bis ca. 4 m aufweisen. Damit erreichen die mit diesen Sammelkammern hergestellten Primär vliese bereits Breiten, die den üblichen Fertigungslängen dieser aufwickelbaren Dämmfilze entsprechen, so dass die Neigung zur Bildung von Rissen in den am stärksten umgelenkten und hoch verdichteten Bereichen eines aufgewickelten Dämmfilzes verringert wird. Derartige Sammelkammern werden quer zur Haupt-Produktionsrichtung aufgestellt, um das Primarvlies direkt in die Pendelvorrichtung führen zu können.

In den im Stand der Technik beschriebenen und betriebenen Produktionsanlagen sind das Schmelzaggregat und die Sammelkammer in Produktionsrichtung ausgerichtet. Durch diese Ausrichtung ist eine Umlenkung eines ca. 2 bis ca. 2,5 m breiten Primärvlieses erforderlich, bevor das Primärvlies quer zur Produktionsrichtung auf eine Fördereinrichtung abgelegt werden kann. Bei dieser Umlenkung um 90° wird das Primärvlies einerseits parallel zur seiner Längsachse gedehnt und andererseits gestaucht. Diese Stauchung wird zumeist durch Auffaltungen kompensiert.

Das voranstehend beschriebene Verfahren hat sich bei einer direkten Aufsammlung der Mineralfasem als vorteilhaft erweisen. Bei diesem Verfahren werden die Mineralfasem in der Sammelkammer aufeinander gelagert. Hierbei sind erheblich größere Kühlwassermengen erforderlich, um eine vorzeitige Verfestigung der Bindemittel auszuschließen. Durch diese Kühlwassermengen steigen die Bindemittelverluste. Die verbleibenden Kühlwassermengen müssen mit entsprechendem Energie-Einsatz in einem nachgeschalteten Härteofen entfernt werden. Weiterhin kann die ungleiche Verteilung der Mineralfasern über die Fläche und in der Höhe der Mineralfaserbahn nicht mehr korrigiert werden, was die Qualität der hergestellten Dämmstoffe negativ beeinträchtigt.

Bei der Herstellung von Dämmstoffen aus Glaswolle werden die mit Binde- und Hydrophobiermitteln imprägnierten Mineralfasem direkt unterhalb der Zerfaserungsmaschine bzw. einem daran anschließend angeordneten Fallschacht auf einer Fördereinrichtung gesammelt. Wegen der geringen spezifischen Leistung der Zerfaserungsmaschine ist die aufgesammelte Mineralfaserbahn jedoch relativ dünn ausgebildet. Die für ein wirtschaftliches Herstellungsverfahren erforderlichen Mengen an Mineralfasem werden daher durch die Aneinanderreihung mehrerer Zerfaserungsmaschinen erreicht. Hierbei wird jede hergestellte Mineralfaserbahn ausreichend gekühlt, bevor die nächste Mineralfaserbahn als weiter Lage darüber gelegt wird.

Bei der Herstellung leichter Dämmplatten und Dämmfilze wird die endlose Mineralfaserbahn im wesentlichen auf die gewünschte Lieferdicke und ergänzend in Förderrichtung komprimiert. Eine wesentlich intensivere Stauchung in Förderrichtung wie abgeschwächt in zu den großen Oberflächen rechtwinkliger Richtung ist bei der Herstellung von Dämmplatten erforderlich, die trotz niedriger Rohdichte eine gewisse Druckbelastbarkeit aufweisen sollen.

Die Stauchungen der endlosen Mineralfaserbahn in Förderrichtung und in zu den großen Oberflächen rechtwinkliger Richtung erfolgt mit Hilfe von beispielsweise formstabilen Walzen, Rollen, Bändern aus Gummi, Stahlblech oder dergleichen, die in Kompressionsvorrichtungen eingebaut sind. Diese Kompressionsvorrichtungen können in ihrer relativen Anordnung zu den Oberflächen der endlosen Mineralfaserbahn variiert werden. Häufig wird die Mineralfaserbahn auf einer horizontal gerichteten Einrichtung gefördert, während die darüber angeordnete Kompressionsvorrichtung einen entsprechenden Anstellwinkel aufweist. Die Kompressionsvorrichtung kann im Bereich beider großen Oberflächen der Mineralfaserbahn eine gleichmäßige Verringerung der Geschwindigkeit bewirken. Die Kompressionsvorrichtungen können aber auch in hintereinander geschaltete Segmente unterteilt sein, die beispielsweise mit abgestuften Geschwindigkeiten betrieben werden.

Während bei den voranstehend beschriebenen Verfahrung die Mineralfaserbahn über ihre gesamte Breite gestaucht wird, beschreibt die DE 198 60 040 A1 eine Vorrichtung, mit der über die Breite der Mineralfaserbahn unterschiedlich hohe Stauchungen zeitlich versetzt ausgeführt werden können. Der hierbei in der Praxis verwendete Stauchkanal weist eine Höhe von weniger als 40 mm, insbesondere weniger als 25 mm auf, um eine kartonartige dünne und somit hoch verdichtete Dämmstoffplatte zu erzeugen. Bei Dämmstoffplatten mit größeren Materialstärken reichen die übertragbaren Scherkräfte nicht aus, um die gewünschte Struktur über die gesamte Materialstärke der Mineralfaserbahn herzustellen.

Hochbelastbare Dämmstoffplatten für die Dämmung von flach geneigten Dachflächen müssen begehbar sein und beispielsweise dem Druck von Kiesschüttungen, Substrat- und Wasserschichten oder Schneelasten widerstehen. Um die dafür notwendigen Anfangs-Druckspannungen in der Größenordnung von 60 bis ca. 75 kPa bei 10 % Stauchung zu erreichen, muss die Rohdichte der Dämmstoffplatten etwa 180 bis ca. 200 kg/m³ betragen, wobei auch die Bindemittelgehalte angehoben werden. Diese Möglichkeit ist aber eng begrenzt, da zu hohe Gehalte an organischen Bestandteilen die Einstufung des Dämmstoffs als nicht brennbar gefährden.

Da die Verlegung dieser Dämmstoffplatten von Hand erfolgt, sind wirtschaftlich herzustellende großformatige Platten mit diesen Rohdichten viel zu schwer, um sie ohne Überlastung der Handwerker verlegen zu können. Um das Eigengewicht der Dämmstoffplatten zu reduzieren und gleichzeitig auch die Wirtschaftlichkeit zu verbessern, werden die Mineralfasern der imprägnierten endlosen Mineralfaser bahn durch eine Stauchung in Förder- oder Längsrichtung von ca. 2 : 1 bis zu ca. 4 : 1 und durch eine Stauchung rechtwinklig zu den großen Oberflächen der Mineralfaserbahn von ca. 1 : 1 bis ca. 2 : 1 in eine steile Lage relativ zu den großen Oberflächen gebracht und dabei intensiv miteinander verfaltet. Es werden dabei Hauptfaltungen ausgebildet, deren Flanken selbst verfaltet sind. Die Rohdichte von einer solchen Mineralfaserbahn abgetrennten Dämmstoffplatten mit Faltungsstruktur kann auf einen Wert von < 150 kg/m³ und mit zunehmender Dicke bis auf einen Wert von etwa 130 kg/m³ abgesenkt werden. Hieraus resultieren neben der Reduzierung der aus der Mineralfaserbahn hergestellten Dämmstoffplatten Gewichtseinsparung auch erhebliche wirtschaftliche Vorteile, da die Dämmstoffplatten mit größeren Formaten hergestellt und verarbeitet werden können. Die wirtschaftlichen Vorteile ergeben sich daher nicht nur auf der Seite des Herstellers, sondern insbesondere auch auf der Seite des gewerblichen Anwenders.

Durch das Verfalten der Mineralfaserbahn werden Faltenachsen ausgebildet, die quer zur Auffaltungs- und Förderrichtung und somit parallel zu der Hauptorientierung der einzelnen Mineralfasem verlaufen. Diese intensiv verfalteten Dämmstoffplatten weisen somit in der Richtung quer zur Auffaltungs- und Förderrichtung eine etwa dreimal so hohe Biegefestigkeit auf, wie in Faltungs- bzw. Förderrichtung.

Neben den voranstehend genannten Dämmstoffelementen sind Lamellen aus dem Stand der Technik bekannt. Lamellen sind Abschnitte von Mineralfaserbahnen, deren Schnittfläche die großen Oberflächen bilden, so dass die Mineralfasern in den Lamellen rechtwinklig zu den großen Oberflächen ausgerichtet sind. Mehrere Lamellen können nebeneinander angeordnet und miteinander verbunden werden. Die Lamellen weisen eine nur geringe Querverbindungen auf. Lamellen weisen eine hohe Zugfestigkeit rechtwinklig zu den großen Oberflächen auf.

Durch die intensiven Stauchungen und die damit verbundenen Auf- und Verfaltungen werden die Primärvlieslagen auf Dicken von ca. 1 - ca. 3 mm. vorzugsweise ca. 2 mm komprimiert und bilden dünne Lamellen. Diese Bildung von Lamellen wird durch die relativ hohe innere Kohäsion aufgrund der Bindemittelkonzentrationen begünstigt. An Grenzflächen der Lamellen verbleiben bindemittelarme bis bindemittelfreie Mineralfasern. Wegen der starken Relativbewegungen der Grenzflächen bei der Auffaltung und der dabei erfolgenden Umorientierung der nur ca. 6 bis 8 µm dicken und sehr kurzen einzelnen Mineralfasern parallel zu den Grenzflächen werden ohnehin keine oder nur wenige Querverbindungen zwischen den Lamellen aufgebaut.

Durch die einseitig gerichteten Faltungen bilden sich in der Mineralfaserbahn Bereiche zwischen den Falten aus, in denen die Mineralfasem im wesentlichen gerollt und dabei deutlich weniger komprimiert werden als die grob- und feingefalteten Lamellen. Bei Mineralfasernbahnen mit mittleren und niedrigen Rohdichten sind diese Erscheinungen ausgeprägter, als bei höher verdichteten Mineralfaser bahnen. Diese Bereiche tragen wenig zu der mechanischen Festigkeit der gesamten Struktur bei.

Die ausgeprägte Richtungsabhängigkeit der mechanischen Eigenschaften der Mineralfaserbahn und damit der daraus hergestellten Dämmstoffbahnen und Dämmstoffplatten wird beispielsweise ausgenutzt, um Dämmstoffplatten mit besonders hohen Querzugfestigkeiten rechtwinklig zu den großen Oberflächen herzustellen. Dazu wird die endlose Mineralfaserbahn beispielsweise in Förderrichtung im Bereich von ca. 1,7 : 1 bis ca. 2,7 : 1 und in der Höhe zwischen ca. 1,7 : 1 bis ca. 2,2 : 1 durch Stauchung aufgefaltet wird, so dass die ausgehärteten Dämmstoffplatten Rohdichten von ca. 75 bis ca. 110 kg/m³ aufweisen.

Lamellen werden aus Mineralfaserbahn hergestellt, die eine maximale Höhe von zur Zeit ca. 200 mm aufweisen, wobei die maximale Höhe durch die Konstruktion der zur Verfestigung der Bindemittel verwendeten Härteöfen bestimmt wird. Von dieser Mineralfaserbahn werden in Faltungs- bzw. Förderrichtung Scheiben in der gewünschten Dämmdicke abgeschnitten. Diese Lamellen sind 1 m oder 1,2 m lang und 0,2 m breit. Bei diesen Lamellen sind die Flocken des Primärvlieses und damit auch überwiegend die diese bildenden einzelnen Mineralfasem überwiegend rechtwinklig oder sehr steil zu den Schnittflächen ausgerichtet, die die großen Oberflächen der Lamellen darstellen. Die Lamellen weisen durch die Orientierung der Mineralfasem sehr hohe Druckfestigkeiten und relativ dazu noch höhere Querzugfestigkeiten auf, weshalb die Rohdichte der Mineralfaserbahn zur Herstellung von Lamellen reduziert werden kann. Somit kann die relativ hohe Wärmeleitfähigkeit der Dämmstoffplatten beibehalten und gleichzeitig die Herstellungskosten gesenkt werden.

Lamellen werden zu Lamellenplatten zusammengesetzt und beispielsweise als Putzträgerplatten in Wärmedämm-Verbundsystemen verwendet oder beidseitig mit Blechen verklebt, um den tragenden und zugleich dämmenden Kern von sogenannten Sandwichelemente für Wand- oder Dachkonstruktionen zu bilden.

Eine nähere Betrachtung der Schnittflächen zeigt, dass die Struktur der Lamellen durch starke Inhomogenitäten geprägt ist, so dass jeweils nur ein Teil der beiden großen Oberflächen für die Kraftübertragung genutzt werden kann.

Es ist bekannt, die Inhomogenitäten, insbesondere nicht oder nur schwach gebundene Mineralfasern zumindest bis zu einer gewissen Tiefe durch Abbürsten und Absaugen zu entfernen, um so äußere Bereiche der zug- und druckfesten Lamellen zu erzielen. Auf diese Weise kann die Kontaktfläche zwischen einem Kleber oder Putz und der Lamelle deutlich vergrößert werden.

Ausgehend von diesem Stand der Technik liegt der Erfindung die **Aufgabe** zugrunde, ein Verfahren und eine Vorrichtung zur Herstellung von bahnen- oder plattenförmigen Dämmstoffen aus Mineralfasern, vorzugsweise aus mit Bindemitteln gebundener Steinwolle zu schaffen mit dem bzw. mit der bahnenförmige oder plattenförmigen Dämmstoffen herstellbar sind, bei denen die mit Bindemitteln angereicherten Mineralfasem mehr in den kraftübertragenden Oberflächen verteilt sind und bei denen abrupte Wechsel zwischen festen und weniger festen Bereichen vermieden werden.

Die Lösung dieser Aufgabenstellung sieht bei einem gattungsgemäßen Ver fahren vor, dass die Mineralfaserbahn vor der Zuführung zum Härteofen in einer ersten Bearbeitungsstation in Längsrichtung bzw. Förderrichtung und /oder einer von der Längsrichtung bzw. Förderichtung abweichenden, vorzugsweise rechtwinklig zur Längsrichtung bzw. Förderrichtung verlaufenden Richtung gestreckt wird. Bei einer erfindungsgemäßen Vorrichtung ist zur **Lösung** der Aufgabenstellung vorgesehen, dass zwischen der Zerfaserungseinrichtung und dem Härteofen eine ersten Bearbeitungsstation angeordnet ist, in der die Mineralfaserbahn in Längsrichtung bzw. Förderrichtung und /oder einer von der Längsrichtung bzw. Förderichtung abweichenden, vorzugsweise rechtwinklig zur Längsrichtung bzw. Förderrichtung verlaufenden Richtung gestreckt wird.

Der wesentliche Gedanke der Erfindung besteht also darin, dass die Mineralfasem zu einer Mineralfaserbahn direkt aufgesammelt werden und die gegebenenfalls mit Binde- und sonstigen Zusatzmitteln imprägnierte Mineralfaserbahn vor einer gegebenenfalls weiteren Verformung und einer anschließenden Fixierung der daraus resultierenden Strukturen in einem Härteofen in Produktions-Längsrichtung und demnach in Längsrichtung bzw. Förderrichtung gedehnt wird. Die Mineralfaserbahn kann als Primärvlieslage ausgebildet sein oder mehrere übereinander angeordnete Primärvlieslagen aufweisen.

Bei den aus einer oder mehreren Primärvlieslagen und quer zu der eigentlichen Produktionsrichtung aufgebauten Mineralfaserbahnen werden die in Längsrichtung des Primärvlieses ausgerichteten Flocken mit ihren unterschiedlich eng aneinander gelagerten und auch unterschiedlich fest miteinander gebundenen Mineralfasem durch Querkräfte auseinander gezogen. Damit wird die Konzentration der Bindemittel vermindert und deren festigkeitssteigernde Wirkung auf größere Volumeneinheiten innerhalb der Mineralfaserbahn verteilt. Das wiederum bewirkt eine Steigerung der mechanischen Festigkeitswerte. Bei dieser Umformung der Flocken werden auch die flächigen Gebilde aus schwach gebundenen und aus ungebundenen Mineralfasem erfasst, so dass die von diesen Gebilden bewirkten Trennwirkungen deutlich abgeschwächt werden.

Bei einer ausreichend großen Dehnung quer zur Längsrichtung bzw. Förderrichtung wird auch die Ausrichtung der Mineralfasern deutlich in Zugrichtung verändert und damit die Festigkeitswerte der Mineralfaserbahn parallel zur Zugrichtung in den aus der Mineralfaserbahn herzustellenden Dämmstoffen, beispielsweise Dämmstoffbahnen oder Dämmstoffplatten oder sonstigen Formteilen erhöht. Die erhöhten Festigkeitswerte der Dämmstoffe wirken sich auf die Festigkeit von beispielsweise Wärmedämm-Verbundsystemen aus oder erlauben eine Abminderung des Materialeinsatzes in Form einer Absenkung der Rohdichte der verwendeten Dämmstoffe. Hieraus resultieren wesentliche wirtschaftliche Vorteile seitens des Herstellers derartiger Dämmstoffe und seitens der Verarbeiter derartiger Dämmstoffe.

Bei den direkt aufgesammelten Mineralfaserbahnen oder den aus mehreren direkt aufgesammelten, Primärvlieslagen bildenden Mineralfaserbahnen wirkt sich die Streckung entsprechend aus.

Bei einer Weiterbildung des erfindungsgemäßen Verfahrens ist vorgesehen, dass die Mineralfaserbahn in einer der ersten Bearbeitungsstation vorgeschalteten zweiten Bearbeitungsstation in Längsrichtung bzw. Förderrichtung gestaucht wird. Durch diese Stauchung wird die Rohdichte der Mineralfaserbahn erhöht und die Bindung der Mineralfasem verbessert, so dass bei der nachfolgenden Streckung der Mineralfaserbahn die Tendenz zur Bildung von Rissen in der Mineralfaserbahn verringert ist.

Vorzugsweise erfolgt die Streckung und/oder die Stauchung der Mineralfaserbahn durch eine gegenüber der Fördergeschwindigkeit der Mineralfaserbahn in den Bearbeitungsstationen erhöhte oder reduzierte Fördergeschwindigkeit. Die Streckung kann ebenso wie die Stauchung mir den bestehenden Anlagen ausgeführt werden. Insbesondere bietet diese Weiterbildung aber den Vorteil, dass sowohl die Streckung als auch die Dehnung in einfacher Weise auf die Mineralfaserbahn angepasst werden kann, indem die Fördergeschwindigkeiten in einzelnen Abschnitten der Produktionsanlage variiert wird.

Nach einem weiteren Merkmal der Erfindung ist vorgesehen, dass die Streckung und/oder Stauchung der Mineralfaserbahn unmittelbar nach der Zerfaserungseinrichtung durchgeführt wird. In diesem Bereich weist das Bindemittel eine noch hohe Klebfähigkeit auf, so dass eine Veränderung der Strukturen in der Mineralfaserbahn problemlos möglich ist, ohne dass bereits mit mehr oder weniger ausgehärtetem Bindemittel verbundene Mineralfasem oder Agglomerationen von Mineralfasem unter dem Risiko von Rissbildungen getrennt werden müssen.

Vorzugsweise wird die Mineralfaserbahn im Anschluss an die Zerfaserungseinrichtung als Primärvlies einer pendelnden Fördereinrichtung zugeführt, in der das Primärvlies gestreckt wird, bevor das Primärvlies als Sekundärvlies auf einer der pendelnden Fördereinrichtung nachgeschalteten Fördereinrichtung mäandrierend abgelegt wird. Diese Weiterbildung der Erfindung sieht die Anwendung des erfindungsgemäßen Gedanken bei der Herstellung von Dämmstoffen aus Mineralfasem vor, die aus mehreren Primärvlieslagen gebildet werden.

Nach einem weiteren Merkmal der Erfindung ist vorgesehen, dass die Mineralfaserbahn in Teilbereichen ihrer großen Oberflächen durch die Übertragung unterschiedlich hoher Zugkräfte gestreckt wird, um über die Breite der Mineralfaserbahn unterschiedliche hohe Zugkräfte zu übertragen. Hierzu können kraftübertragende Einrichtungen, wie Bänder, Walzen, Rollen oder Räder vorgesehen sein, die nur auf bestimmte, über die Breite der endlosen Mineralfaserbahn verteilt angeordnete Bereiche wirken und beispielsweise oberhalb und/oder unterhalb der Mitte der Mineralfaserbahn oder aber auch versetzt zueinander angeordnet sind.

Die voranstehend genannten Einrichtungen sind in der ersten Bearbeitungsstation angeordnet, in die die endlose Mineralfaserbahn eingezogen wird. Zumindest besteht die erste Bearbeitungsstation aus zumindest einem oberen und zumindest einem unteren Band, zwischen denen wird die Mineralfaserbahn soweit eingeklemmt wird, dass die Bänder ausreichende Zugkräfte auf die großen Oberflächen der Mineralfaserbahn übertragen können. Anstelle oder in Ergänzung der Bänder können glatte, gerippte oder gezahnte Walzen vorgesehen sein. Die oberen und/oder die unteren Bänder und/oder Walzensätze können in bezug auf die Ausrichtung der Mineralfaserbahn schräg zur Horizontalebene bzw. zu den großen Oberflächen der Mineralfaserbahn angeordnet sein.

Die erste Bearbeitungsstation weist vorzugsweise Drucksensoren auf, so dass die für die Streckung der Mineralfaserbahn erforderliche und übertragene Zugkraft über diese Drucksensoren gemessen wird, um zumindest ein unerwünschtes Auseinanderreißen der Mineralfaserbahn bei angestrebten großen Streckungen zu verhindern.

Mit Hilfe der ersten Bearbeitungsstation wird die endlose Mineralfaserbahn gemäß einem weiteren Merkmal der Erfindung kontinuierlich um ca. 5 bis ca. 20 %, vor zugsweise 5 bis 12 % bezogen auf ihre Ausgangslänge gestreckt und beispielsweise hinter der ersten Bearbeitungsstation auf eine unmittelbar anschließende zweite Fördereinrichtung übergeben.

Sofern die erste Bearbeitungsstation unmittelbar im Anschluss einer Ablagestation bzw. einer Pendelvorrichtung für die als Primärvlieslage ausgebildete Mineralfaserbahn angeordnet ist, kann das Gewicht der abgelegten Mineralfaserbahn zu gering sein, um einen ausreichend hohen Gegenzug zu entwickeln. In diesem Fall ist vorgesehen, dass die Mineralfaserbahn, insbesondere das Primärvlies vor der ersten Bearbeitungsstation in Richtung auf ihre großen Oberflächen komprimiert wird. Zu diesem Zweck kann die Vorrichtung zumindest ein Paar angetriebener Walzen, zumindest einen obere und einen unteren Rollensatz und/oder ein oberes und ein unteres Förderband aufweisen, welches der ersten Bearbeitungsstation vorgeschaltet ist. Beispielsweise können die Walzen, Rollensätze und/oder Förderbänder integraler Bestandteil der zweiten Bearbeitungsstation sein, in der die Mineralfaserbahn in Längsrichtung bzw. Förderrichtung gestaucht wird.

Eine alternative Ausführungsform der Erfindung kann vorsehen, dass die endlose Mineralfaserbahn vor und während der Streckung mehrfach umgelenkt wird, um die einzelnen Lagen der Mineralfaserbahn innerhalb der Mineralfaserbahn unterschiedlich auszuziehen.

Sollen Dämmstoffe mit mittleren bis hohen Rohdichten hergestellt werden, bei denen eine Vorkomprimierung des Primärvlieses nicht zu unerwünschten Steigerungen der Rohdichte des Dämmstoffs führt, sieht die Erfindung vor, dass das Primärvlies gestreckt wird. Erfindungsgemäß wird hierzu die Geschwindigkeit von zwei Förderbändern einer Pendelvorrichtung gegenüber einer vorgeschalteten, die Sammelkammer mit der Pendelvorrichtung verbindenden Fördereinrichtung höht. Ergänzend kann das Primärvlies vor der Pendelvorrichtung komprimiert werden. Hierzu kann eine zusätzliche Walze oder ein zusätzliches Band oberhalb der Fördereinrichtung angeordnet sein, welches auf die frei große Oberfläche des Primärvlies komprimierend einwirkt.

Bei der Herstellung von Dämmstoffen mit einer Rohdichte von ≥ 75 kg/m³ kann die endlose Mineralfaserbahn vor der Streckung in der ersten Bearbeitungsstation um bis zu 50 % ihrer Ausgangsmaterialstärke komprimiert und anschließend erfindungsgemäß gestreckt werden. Die hierbei entstehende kompakte Mineralfaserbahn weist eine erhöhte Scherfestigkeit auf. Unmittelbar vor dem Strecken wird die Mineralfaserbahn entlastet und auflagefrei gezogen, bevor die Mineralfaserbahn in der ersten Bearbeitungsstation erneut deutlich komprimiert wird.

Dient die endlose Mineralfaserbahn der Herstellung von Dämmstoffen mit möglichst flach gelagerten und nach Möglichkeit nicht ausgerichteten Mineralfasem, wie beispielsweise wickelbaren Dämmfilzen oder als Vormaterial für die Herstellung von Formteilen, Rohrschalen oder dergleichen, wird die Mineralfaserbahn in einem gestreckten Zustand gehalten. Eventuell entstandene Risse werden durch ein Zusammenschieben der Mineralfaserbahn verschlossen, wobei Stauchungen der Mineralfaserbahn vermieden werden. Demzufolge ist nach einem weiteren Merkmal der Erfindung vorgesehen, dass die gestreckte Mineralfaserbahn zur Schließung von Rissen oder anderen Öffnungen geringfügig um ein Schubmaß zusammengeschoben wird, wobei das Schubmaß kleiner ist, als das Maß der Streckung.

Es besteht auch bei dem erfindungsgemäßen Verfahren die Möglichkeit, die Mineralfaserbahn gemäß dem Stand der Technik ergänzend in Längsrichtung zu Stauchen, um die Mineralfaserbahn mäanderförmig aufzufalten. Bei dieser bekannten Vorgehensweise hat das erfindungsgemäße Verfahren, nämlich die erfindungsgemäße Streckung der Mineralfaserbahn den Vorteil, dass eine große Streckung der Mineralfaserbahn die mäanderförmige Auffaltung und eine Verschiebung der Mineralfasem in der Mineralfaserbahn zur Bildung neuer Verbindungen zwischen den Mineralfasem und den Mäandern der Mineralfaserbahn unterstützt und leichtert.

Nach einer weiteren Ausgestaltung der Erfindung ist vorgesehen, dass lose Mineralfasern, insbesondere bindemittelfreie Mineralfasern vor der Streckung von zumindest einer großen Oberfläche der Mineralfaserbahn entfernt, insbesondere abgesaugt und/oder abgeblasen werden. Das Entfernen von losen und/oder bindemittelfreien Mineralfasern hat den Vorteil, dass die Verbindung von mäandrierend angeordneten Bereichen verbessert wird. Das Absaugen oder abblasen der losen oder unzureichend gebundenen Mineralfasern erfolgt vorzugsweise vor der Pendelvorrichtung.

Weiterhin kann vorgesehen sein, dass zumindest eine der großen Oberflächen der Mineralfaserbahn, insbesondere des abzulegenden Primärvlieses mit zusätzlichen Bindemitteln und Wasser angefeuchtet wird, um eine bessere Verbindung der einzeln mäandrierend angeordneten Primärvlieslagen in einem derart gebildeten Sekundärvlies, insbesondere nach einer intensiven Auffaltung zu erreichen. Durch die nachfolgenden Stauchungsvorgänge und die dadurch bewirkten Reibungsvorgänge werden die Bindemittel zwischen die Mineralfasern gepresst und gleichzeitig gleichmäßiger verteilt.

Sollte dieser verbesserte Verbindung der Mineralfasern bzw. der Primärvlieslagen im Sekundärvlies aufgrund einer Hydrophobierung der Mineralfasern und der daraus gebildeten Mineralfaserbahn nicht ausreichend ausgebildet werden, ist erfindungsgemäß vorgesehen, die großen Oberflächen des Primärvlies vor der Auffaltung mit einem Wasser-Alkohol-Gemisch zu besprühen.

Die Klebfähigkeit in der Mineralfaserbahn vorhandener Bindemittel kann durch ein Aufsprühen von Wasser mit Tensiden verbessert oder wieder hergestellt werden. Diese Tenside verbessern die Benetzungsfähigkeit der hydrophoben Mineralfasem und werden nur punktweise und zeitweilig wirkend aufgebracht, da sie durch hohe Temperaturen im Härteöfen wieder zerstört werden müssen, um die Gebrauchseigenschaften der aus der Mineralfaserbahn hergestellten Dämmstoffe nicht negativ zu beeinträchtigen.

Für die Bindung der Mineralfasem eignen sich neben duroplastischen Bindemittel insbesondere auch thermoplastische Bindemittel, wie beispielsweise in Wasser dispergierte Polyacrylate, die duroplastisch gebundene Lamellen plastisch verbinden können. Die voranstehend genannten Mittel werden vorzugsweise mit Hochdruckdüsen auf die Mineralfaserbahn aufgesprüht, so dass die Mittel in geringen Tröpfchengröße bis hin zu nebelartigen Aerosolen aufgebracht werden. Die Hochdruckdüsen sind beispielsweise am Ausgang einer Pendelvorrichtung angeordnet.

Um eine Beeinträchtigung der Umgebung durch die zugesetzten Mittel auszuschließen, ist unterhalb einer im Förderweg vorgesehenen, insbesondere als Förderband ausgebildete Ablagestelle für das Primärvlies eine Absaugvorrichtung angeordnet. Die Absaugvorrichtung weist vorzugsweise Leitbleche oberhalb der Ablagestelle auf. Durch die Filterwirkung des auf die Ablagestelle abgelegten Primärvlieses wird die abgesaugte Luft nicht oder nur ganz wenig durch mitgerissene Bindemittel belastet.

Für die Herstellung von hart-federnde Dämmstoffe, wie Dachdämmplatten, Putzträger-Dämmplatten oder Dämmstoffe für die Dämmung von Apparaten, Anlagen oder Rohrleitungen können mit dem erfindungsgemäßen Verfahren hergestellte Mineralfaserbahnen eingesetzt werden, bei denen als Bindemittel vorzugsweise Alkohol-Silan-Verbindungen vorgesehen sind, die im Härteofen durch eine Sol-Gel-Reaktion aushärten. Als alternative Bindemittel können Kieselsol, Wassergläser oder Polyphosphate vorgesehen sein, sofern ausreichend hohe Temperaturen bei der Aushärtung erreicht werden.

Um eine gleichmäßige Zugspannung in der primären Faserbahn zu erzeugen, ist vorgesehen, dass die Mineralfaserbahn im Bereich der ersten Bearbeitungsstation ergänzend in Richtung ihrer Flächennormalen einer großen Oberfläche mit einer vorzugsweise linienförmig wirkenden Kraft quer zur Längs- bzw. Förderrichtung belastet wird. Hierzu kann beispielsweise vorgesehen sein, dass die Mineralfaserbahn durch eine oder mehrere, vorzugsweise angetriebene Rolle(n) abgelenkt sowie umgelenkt wird. Die Mineralfaserbahn kann auch zwischen versetzt übereinander angeordnete angetriebene Rollenpaare oder durch Rollensätze geführt werden, um die notwendige Zugspannung durch Reibung bzw. Erhöhung der Umschlingungswinkel und gegebenenfalls durch eine leichte Kompression der Mineralfaserbahn zu erreichen.

Diese Weiterbildung des Verfahrens kann auch bei der Herstellung von direkt aufgesammelten imprägnierten Mineralfaserbahnen durchgeführt werden und ist nicht auf die Herstellung von Primärvliesen beschränkt.

Es ist somit bei der Weiterbildung des erfindungsgemäßen Verfahrens vorgesehen, dass die Kraft über zumindest eine quer zur Längsrichtung bzw. Förderrichtung der Mineralfaserbahn, insbesondere ein Primärvlies verlaufende, insbesondere angetriebene Rolle auf die Oberfläche der Mineralfaserbahn übertragen wird, wobei die Mineralfaserbahn aus einer gestreckten Lage in eine schlaufenförmige Lage umgelenkt wird.

Nach einem alternativen Merkmal des erfindungsgemäßen Verfahrens ist vorgesehen, dass die Kraft über zumindest einen quer zur Längsrichtung bzw. Förderrichtung der Mineralfaserbahn verlaufenden, insbesondere angetriebenen Rollensatz mit einander gegenüberliegend angeordneten, einen Spalt bildenden Rollen auf die Oberfläche der Mineralfaserbahn übertragen wird.

Vorzugsweise wird die Mineralfaserbahn zwischen den Rollen des Rollensatzes komprimiert.

Nach einem weiteren Merkmal der Erfindung ist vorgesehen, dass die Mineralfaserbahn im Bereich der ersten Bearbeitungsstation mäandrierend über mehrere Rollen geführt wird.

Mineralfaserbahnen, die aufgerollt und dabei komprimiert werden, werden mit maximalen Dicken von derzeit 240 mm hergestellt,. Beim Wickelvorgang werden im Wickel außen liegende Zonen der Mineralfaserbahn auf Zug und im Wickel innen liegende Zonen auf Druck beansprucht. Von diesen in der Regel mehrere Meter langen Mineralfaserbahnen werden baustellenseitig quer zur Längserstreckung der Mineralfaserbahn Abschnitte abgetrennt und beispielsweise zwischen Dachsparren, Ständern von Wänden, Decken- und/oder Unterkonstruktionen klemmend eingebaut. Diese plattenförmige Abschnitte müssen daher eine bestimmte Elastizität aufweisen, welche eine elastische Verformung, verbunden mit hohe Rückstellkräfte ermöglicht.

Um ein Aufreißen der auf Zug beanspruchten Zonen beim wickeln der Mineralfaserbahn zu vermeiden, ist es vorteilhaft, die Flocken aus Mineralfasem bzw. die Mineralfasem an sich in Richtung der Längserstreckung zu orientieren, während die Mineralfasem in den auf Druck beanspruchten Zonen in üblicher Weise quer zu einer Wickelwelle ausgerichtet sind. Ein derartig ausgebildetes Dämmstoffelement würde eine hohen Kompressibilität aufweisen.

Üblicherweise wird das Primärvlies zu Herstellung einer Mineralfaserbahn als Sekundärvlies quer zur Förderichtung des Primärvlieses auf einer zweiten Fördereinrichtung abgelegt, wobei die einzelnen Primärvlieslagen des Sekundärvlieses geringfügig versetzt zueinander angeordnet werden. Für die Herstellung der Mineralfaserbahn ist es von Vorteil, die Breite des Primärvlieses in etwa entsprechend de Länge der Mineralfaserbahn auszubilden. Es werden daher Sammelkammern verwendet, mit denen Primärvliese mit breiten von mehr als 4 m aufgesammelt werden können. In der Regel sind aber die Primärvliese nicht breiter als ca. 2,5 m. Um diese Primärvliese breiter auszubilden und gleichzeitig die Flocken aus Mineralfasern im Primärvlies quer zur Förderrichtung des Primärvlieses anzuordnen, wird das Primärvlies quer zu seiner Längsrichtung gestreckt, in dem das Primärvlies einer Vorrichtung zugeführt wird, in der die Mineralfaserbahn im wesentlichen rechtwinklig zu ihrer Längsrichtung bzw. Förderrichtung zumindest in Teilbereichen gestreckt wird.

Eine Weiterbildung dieses Verfahrens sieht vor, dass die Mineralfaserbahn durch zumindest einen Rollensatz mit zumindest zwei einander gegenüberliegend angeordneten, einen vorzugsweise einstellbaren Spalt definierenden und jeweils über ihre Mantelfläche Profilierungen aufweisende Rollen geführt wird, wobei die Profilierungen Rollen in Längsrichtung der Rollen versetzt zueinander angeordnet sind.

Nach einem weiteren Merkmal der Erfindung ist ferner vorgesehen, dass die Mineralfaserbahn in einem Teilbereich entlang zumindest einer, vorzugsweise beider Längskanten gestreckt wird, wobei es ergänzend als vorteilhaft angesehen wer den kann, dass die Mineralfaserbahn zumindest in Teilbereichen zumindest einer großen Oberfläche linien- und/oder streifenförmig komprimiert wird.

Weiterhin ist vorgesehen, dass die quer zur Förderrichtung gestreckte Mineralfaserbahn über zumindest eine, vorzugsweise im Bereich ihrer Mantelfläche konvex ausgebildeten Walze geführt wird, mit der eventuelle Faltungen der Mineralfaserbahn entfernt werden. Vorzugsweise wird die Walze pendelnd bewegt, um das Entfernen der Faltungen zu beschleunigen und ganz allgemein zu verbessern.

Zur Durchführung der voranstehend genannten Verfahrensschritte kann die erfindungsgemäße Vorrichtung aus zumindest einer profilierten unteren Rolle und zumindest einer versetzt dazu angeordneten oberen Rolle, insbesondere aber mehreren, einen Rollensatz bildenden Rollen bestehen. Das imprägnierte Primärvlies wird über die in der Regel angetriebene untere Rolle geführt und mit Hilfe der oberen, in der Regel ebenfalls angetriebenen Rolle gefördert und gering komprimiert. Anstelle der unteren Rolle bzw. Rollen eines Rollensatzes können auch schmale, in regelmäßigen Abständen zueinander angeordnete Förderbänder, vorzugsweise aus Metall-Lamellen vorgesehen sein, durch welche das Primärvlies gleichmäßiger gefördert wird.

Um hohe Fördergeschwindigkeiten zu erreichen und ein Aufreißen des nur einen geringen inneren Zusammenhalt bietenden Primärvlieses zu vermeiden, wird das Primärvlies durch mehrere aufeinanderfolgende Rollensätze zunehmend nach unten gedrückt. Die erreichbare Querdehnung des Primärvlieses ist hierbei im Wesentlichen von den Eigenschaften des Primärvlieses und von der Höhe der verwendeten Rollen bzw. der Eindringtiefe der Rollen abhängig.

Sofern eine konstante Querdehnung angestrebt wird, können auch wellenförmig profilierte Walzen eingesetzt werden. Sowohl die Längen der Wellen, wie auch die Amplituden und die Formen der Wellen können über die Breite jeder einzelnen Walze variiert werden. Sinngemäß gilt dies auch für die Abstände, Höhen und Formen der Rollen oder Bänder, wie sie zuvor erwähnt und beschrieben wurden.

Um insbesondere bei partiellen Querdehnungen Widerstandslinien über die Breite des Primärvlieses auszubilden, können oberhalb der unteren Rollen bzw. zwischen den oberen Rollen Anpressrollen vorgesehen werden, die entweder auf den unteren Rollen oder auf zusätzlich eingefügte Rollen aufliegen, bzw. in deren Profilierung eingreifen. Das Primärvlies wird auf nicht mehr als die Dichte der herzustellenden Mineralfaserbahn zusammengedrückt und die Kompression zur Erzielung der angestrebten Dichte in situ gehalten.

Um eine zu hohe Verdichtung des Primärvlieses bzw. der Mineralfaserbahn in der Vorrichtung zu vermeiden, kann zur Herstellung bestimmter Mineralfaserbahnen eine streifenweise Verdichtung des Primärvlieses sowohl nach der Streckung quer zur Längsrichtung des Primärvlieses, wie auch nach der Streckung in Längsrichtung vorgesehen sein. Durch eine nur streifenweise Verdichtung des Primärvlieses in Verbindung mit gestreckten Zwischenbereichen bleibt das Primärvlies gut pendel- und zur Bildung des Sekundärvlieses ausreichend ablagefähig.

Das quer gestreckte Primärvlies wird anschließend über eine oder mehrere, insbesondere in ihrem Oberflächenbereich konvex, vorzugsweise ballig geformte Walze geleitet, die in der Regel angetrieben ist und über welche die zuvor bei der Streckung quer zur Längsrichtung des Primärvlieses eingebrachte Falten entfernt werden. Die Walze kann pendelnd bewegt werden, um das Entfalten durch die Bewegung zu unterstützen. Es können auch mehrere Walzen unter verschiedenen Winkeln zur Förderrichtung nebeneinander oder hintereinander angeordnet werden.

Die Streckung des Primärvlieses kann über die gesamte Breite , abschnittsweise über die Breite verteilt, nur an einem Rand oder auch an beiden Rändern des Primärvlieses ausgeführt werden. Dazu müssen die Rollen und oder Walzen einzeln verstellbar sein, um auch quer zur Förderrichtung einen schonenden Übergang vom gestreckten zum ungestreckten Bereich zu ermöglichen.

Schließlich sieht das erfindungsgemäße Verfahren nach einem weiteren Merkmal der Erfindung vor, dass die Mineralfaserbahn vor der Streckung in ihrer Längs- bzw. Förderichtung in einer Richtung quer, insbesondere annähernd rechtwinklig zur Längs- bzw. Förderrichtung gestreckt wird.

Das voranstehend näher beschriebene erfindungsgemäße Verfahren wird in vorteilhafter Weise mit einer erfindungsgemäßen Vorrichtung durchgeführt. Diese Vorrichtung kann durch die nachfolgend genannten und erläuterten Merkmale in bevorzugter Ausführungsform ausgebildet sein.

Vorzugsweise ist der ersten Bearbeitungsstation eine zweite Bearbeitungsstation vorgeschaltet, in der die Mineralfaserbahn in Längsrichtung bzw. Förderrichtung gestaucht wird. Durch diese zweite Bearbeitungsstation können eine Vielzahl von Produkten mit der erfindungsgemäßen Vorrichtung hergestellt werden. Hierbei ist vorgesehen, dass die beiden Bearbeitungsstationen sowohl gemeinsam, als auch getrennt voneinander eingesetzt werden, wobei die erste Bearbeitungsstation zur Durchführung des erfindungsgemäßen Verfahrens betrieben wird.

Es ist weiterhin vorgesehen, dass die erste und/oder die zweite Bearbeitungsstation aus zwei parallel und im Abstand zueinander angeordneten, auf großen Ober flächen der Mineralfaserbahn aufliegenden Fördervorrichtungen besteht, die eine gegenüber der Fördereinrichtung höhere oder niedrigere Fördergeschwindigkeit aufweisen.

Vorzugsweise sind die Fördervorrichtungen als Förderbänder und/oder als Walzen, insbesondere aus Walzensätzen mit mehreren Walzen ausgebildet.

Nach einem weiteren Merkmal der Erfindung ist vorgesehen, dass die erste Bearbeitungsstation als pendelnde Fördereinrichtung ausgebildet ist, mit der eine als Primärvlies ausgebildete Mineralfaserbahn mäandrierend als Sekundärvlies auf einer nachgeschalteten Fördereinrichtung ablegbar ist.

Die voranstehende Ausführungsform der erfindungsgemäßen Vorrichtung kann dadurch in vorteilhafter Weise weitergebildet werden, dass der pendelnden Fördereinrichtung eine Komprimiereinrichtung vorgeschaltet ist, die aus eine Umlenkwalze und einem gegenüberliegenden Walzensatz besteht.

Die nachgeschaltete Fördereinrichtung ist rechtwinklig zur Fördereinrichtung vor der ersten Bearbeitungsstation verlaufend ausgerichtet, so dass das Primärvlies rechtwinklig zur Förderrichtung der nachgeschalteten Fördereinrichtung als Sekundärvlies mäandrierend ablegbar ist.

Weiterhin kann vorgesehen sein, dass die Fördervorrichtungen auf Teilbereichen der großen Oberfläche der Mineralfaserbahn aufliegen.

Vorzugsweise sind die Fördervorrichtungen als gerippte, glatte und/oder gezahnte Fördebänder und/oder Förderwalzen ausgebildet sind.

Nach einem weiteren Merkmal der Erfindung Ist vorgesehen, dass der ersten Bearbeitungsstation eine Absaug- und/oder Gebläsestation vorgeschaltet, mit der lose Mineralfasem von zumindest einer großen Oberfläche der Mineralfaserbahn entfernbar sind.

Schließlich sieht eine Weiterbildung der erfindungsgemäßen Vorrichtung vor, dass die erste Bearbeitungsstation eine Sprüheinrichtung mit zumindest zwei Hochdruckdüsen aufweist, mit der Bindemittel auf zumindest eine große Oberfläche der gestreckten Mineralfaserbahn aufbringbar ist.

Das quer und/oder längs gestreckte Primärvlies wird beim erfindungsgemäßen Verfahren in ans ich bekannter Weise über eine pendelnde Fördereinrichtung quer auf eine zweite, gegenüber der ersten Fördereinrichtung deutlich langsamer laufende Fördereinrichtung abgelegt. Die auf diese Weise versetzt übereinander liegenden Primärvliesbahnen bilden das Sekundärvlies, das auf die gewünschte Dicke und Rohdichte komprimiert wird und dessen Struktur durch die Verfestigung der Bindemittel in einem nachgeschalteten Härteofen fixiert wird.

Durch die unterschiedliche Streckung des Primärvlieses quer zu seiner Längsrichtung lassen sich die Strukturen der daraus hergestellten Mineralfaserbahn beeinflussen. Die Streckungen des Primärvlieses quer zu seiner Längsrichtung, wie auch des aufgependelten Sekundärvlieses führen generell zu einer höheren Kompressibilität der aus dem Sekundärvlies gebildeten Mineralfaserbahn, da die Mineralfasem glatter ausgezogen und somit weniger Mineralfasem bei der nachfolgenden Stauchung der Mineralfaserbahngebrochen werden.

Mit dem erfindungsgemäßen Verfahren bzw. mit der erfindungsgemäßen Vorrichtung sind daher Dämmstoffelemente herstellbar, die vorzugsweise als in Längsrichtung aufrollbare Mineralfaserbahn ausgebildet sind, wobei zu deren Herstellung das Primärvlies nur im Bereich eines in Längsrichtung des Primärvlieses verlaufenden Randes quer zu seiner Längsrichtung gestreckt wird. Durch die Umorientierung der Mineralfasem in Richtung der Förderrichtung, wird die Zugfestigkeit in den hoch beanspruchten äußeren Zonen der Mineralfaserbahn bzw. des daraus hergestellten Wickels deutlich gesteigert, so dass ein Aufreißen der äußeren großen Oberfläche in diesen Zonen verhindert wird.

Die ursprüngliche Orientierung der Flocken aus Mineralfasem quer zur Wickelrichtung ermöglicht anderseits die erforderliche hohe Kompression der Mineralfasem rechtwinklig zu den großen Oberflächen der Mineralfaserbahn, so dass ein erforderliches Lager- und Transportvolumen verringert werden kann, ohne das damit der Nachteil einhergeht, dass die erforderliche und insbesondere erwünschte sprüngliche Materialstärke der Mineralfaserbahn als Lieferdicke nicht mehr reicht wird.

Ein aus einer voranstehend beschriebenen Mineralfaserbahn hergestelltes Dämmstoffelement kann aus einem in beiden in Längsrichtung verlaufenden Rändern quer zur Längsrichtung gestreckten Primärvlies ausgebildet werden. Durch die unterschiedlichen Anordnungen der Mineralfaserbahn werden beispielsweise die Biegezugfestigkeit der Dämmstoffelemente einander angeglichen. Bekanntlich ist die Biegezugfestigkeit in Längsrichtung des Primärvlieses deutlich höher als quer dazu. Die Angleichung führt zu in sich steiferen und leichter zu verarbeitenden Dämmstoffelementen, insbesondere plattenförmiger Ausgestaltung.

Die Kombination von in Förderrichtung linienförmig verdichteten Streifen in Verbindung mit den Streckungen der dazwischen liegenden Zonen des Primärvlieses in Längsrichtung und quer zur Längsrichtung führen durch die von außen auf die beiden großen Oberflächen des Primärvlieses wirkenden Druck- und Scherkräfte zu Strukturunterschiede innerhalb des Primärvlieses und damit zu einem geänderten Verfaltungsvermögen des Sekundärvlieses. Durch eine entsprechende Abstimmung von Breite, Abstand und Verdichtung der Streifen auf die Dicke und die angestrebte Rohdichte des Sekundärvlieses bzw. einer daraus gebildeten Mineralfaserbahn kann eine Struktur aufgefaltet werden, in welcher vorverdichtete Bereiche steil aufgestellt werden. Damit kann beispielsweise die Druckfestigkeit der Dämmstoffelemente erhöht werden.

Weitere Merkmal und Vorteile der Erfindung ergeben sich aus der nachfolgenden Beschreibung der zugehörigen Zeichnung, in der bevorzugte Ausführungsformen einer erfindungsgemäßen Vorrichtung zur Durchführung des erfindungsgemäßen Verfahrens dargestellt sind. In der Zeichnung zeigen:
- Figur 1: einen Abschnitt einer Vorrichtung zur Herstellung einer Mineralfaserbahn in schematisch dargestellter Seitenansicht;
- Figur 2: eine alternative Ausgestaltung eines Abschnitts einer Vorrichtung zur Herstellung einer Mineralfaserbahn in schematisch dargestellter Seitenansicht;
- Figur 3: eine weitere Ausführungsform eines Abschnitts einer Vorrichtung zur-Herstellung einer Mineralfaserbahn in schematisch dargestellter Seitenansicht;
- Figur 4: die Vorrichtung gemäß Figur 3 in einer Draufsicht;
- Figur 5: eine weitere Ausführungsform eines Abschnitts einer Vorrichtung zur Herstellung einer quer zur Förderrichtung gestreckten Mineralfaserbahn in schematisch dargestellter Seitenansicht;
- Figur 6: einen Rollensatz mit zwei Rollen für die Vorrichtung gemäß Figur 5 in einer Ansicht;
- Figur 7: eine zweite Ausführungsform eines Rollensatzes mit zwei Rollen für die Vorrichtung gemäß Figur 5 in einer Ansicht;
- Figur 8: ein Dämmstoffelement mit gestreckt ausgebildeten Seitenrändern im Querschnitt;
- Figur 9: ein Dämmstoffelement mit gestreckt ausgebildeten Oberflächenbereichen im Längsschnitt und
- Figur 10: ein Dämmstoffelement einem gestreckten und einem gestauchten Oberflächenbereich im Längsschnitt.

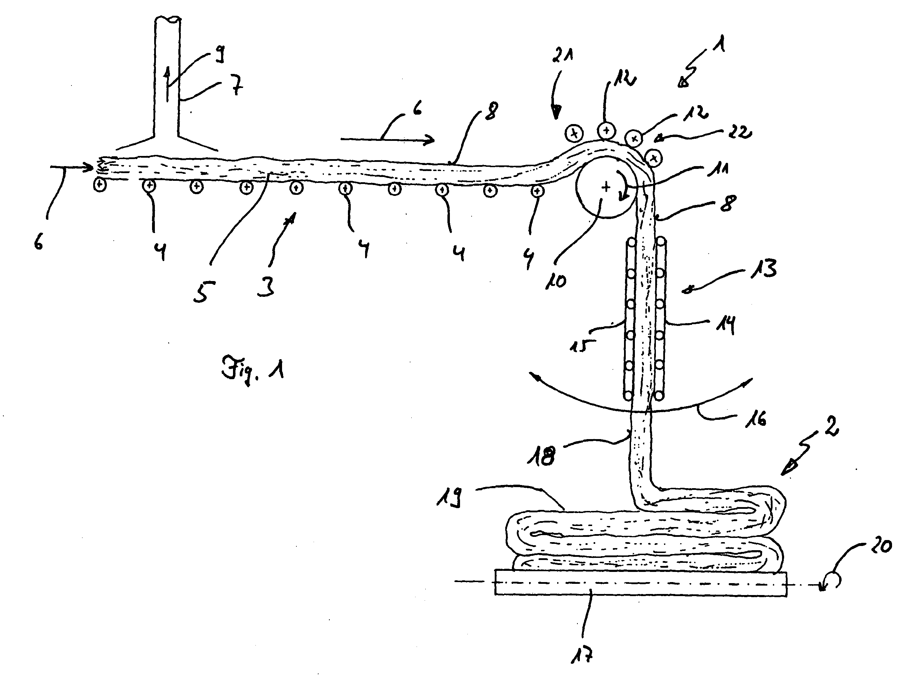

Figur 1 zeigt einen Abschnitt einer Vorrichtung 1 zur Herstellung einer Mineralfaserbahn 2 in schematisch dargestellter Seitenansicht. Dargestellt ist eine horizontal ausgerichtete Rollenbahn 3 mit einer Vielzahl von nebeneinander und im gleichmäßigen Abstand zueinander angeordneten Rollen 4, auf denen ein Primärvlies 5 aufliegt, welches in Richtung eines Pfeils 6 gefördert wird.

Das Primärvlies 5 besteht aus mit Bindemitteln verbundenen Mineralfasern, die in einem nicht näher dargestellten Zerfaserungsaggregat aus einer in einem Kupolofen zerschmolzenen silikatischen Schmelze erzeugt werden. Die silikatische Schmelze besteht aus natürlichen oder künstlichen Steinen, die zusammen mit einem Primärenergieträger, beispielsweise Koks in den Kupolofen gefördert und im Kupolofen bis zum Erreichen der Schmelztemperatur erhitzt werden. Hierbei wird der Primärenergieträger verbrannt. Die Schmelze gelangt aus dem Kupolofen in das Zerfaserungsaggregat, bei dem es sich um eine Kaskaden-Zerfaserungsmaschine handelt, in der vier mit hoher Geschwindigkeit umlaufende walzenförmige Hohlkörper angeordnet sind, wobei die Schmelze auf den obersten Hohlkörper in der Kaskaden-Zerfaserungsmaschine auftritt und von hier auf die jeweils mit entgegengesetzter Umdrehungsrichtung angetriebenen nachfolgenden Hohlkörper übergeben wird. Durch die auf die Schmelze wirkenden Zentrifugalkräfte der zumindest drei unteren Hohlkörper wird die Schmelze zu Mineralfasem zerfasert, die sodann an eine Sammelkammer übergeben werden, in welcher Sammelkammer die Mineralfasem mit Bindemitteln besprüht werden, bevor die mit Bindemitteln benetzten Mineralfasem anschließend auf einer Fördereinrichtung, nämlich einer der Rollenbahn 3 vorgeschalteten Fördereinrichtung als Primärvlies 5 abgelegt werden.

Oberhalb der Rollenbahn 3 ist eine Absaugstation 7 angeordnet, in der ein Unterdruck erzeugt wird. Mit diesem Unterdruck werden lose oder unzureichend in dem Primärvlies gebundene Mineralfasem von einer großen Oberfläche 8 des Primärvlieses 5 abgesaugt und in Richtung eines Pfeils 9 gefördert. Diese abgesaugten Mineralfasern können beispielsweise einen Recyclingprozess zugeführt werden, in dem die Mineralfasem zusammen mit anderen Sekundärrohstoffen zu Formsteinen gepresst werden, welche wiederum dem Kupolofen als Ausgangsmaterial zur Herstellung der Mineralfaserbahn 2 zugeführt werden können.

Die Rollenbahn 3 fördert das Primärvlies 5 mit einer konstanten Fördergeschwindigkeit V1. Am Ende der Rollenbahn 3 läuft das Primärvlies über eine Umlenk- und Zugrolle 10, die mit einer Umfangsgeschwindigkeit U1 in Richtung eines Pfeils 11 angetrieben ist. Die Umfangsgeschwindigkeit U1 ist größer als die Fördergeschwindigkeit V1, so dass das Primärvlies 5 im Bereich der Umlenk- und Zugrolle in Förderrichtung gemäß Figur 6 gestreckt wird.

Der Umlenk- und Zugrolle 10 gegenüberliegend sind vier Walzen 12 angeordnet, deren Antriebsachsen parallel zur Antriebsachse der Umlenk- und Zugrolle 10 verlaufend ausgerichtet sind. Die Walzen 10 sind in ihrem Abstand zur Umfangsfläche der Umlenk- und Zugrolle 10 variabel einstellbar, so dass über die Walzen 10 in Abhängigkeit der Materialstärke des Primärvlieses 5 ein Druck auf die große Oberfläche 8 des Primärvlieses 5 ausgeübt werden kann, wodurch das Primärvlies 5 zwischen der Umlenk- und Zugrolle 10 und den Walzen 12 komprimiert wird.

Die Umlenk- und Zugrolle 10 lenkt das Primärvlies 5 von der horizontalen Ausrichtung auf der Rollenbahn 3 in eine vertikale Ausrichtung um. Im Anschluss an die Umlenk- und Zugrolle 10 läuft das Primärvlies 5 in eine Pendeleinrichtung ein. Die Pendeleinrichtung besteht aus zwei Förderbändern 14 und 15, die jeweils auf einer großen Oberfläche 8 bzw. 18 aufliegen. Die Pendeleinrichtung 13 ist um ein nicht näher dargestellten Festpunkt in Richtung des Pfeils 16 pendelnd angeordnet. Zwischen den Förderbändern 14 und 15 kann das Primärvlies 5 ergänzend komprimiert werden.

Durch die Pendelbewegung der Pendeleinrichtung 13 wird das Primärvlies 5 mäandrierend auf einem Förderband 17 abgelegt, so dass das Primärvlies 5 auf dem Förderband 17 ein Sekundärvlies 19 bildet. Das Förderband 17 verläuft rechtwinklig zur Förderrichtung gemäß Pfeil 6, wobei das Primärvlies quer zur Längserstreckung des Förderbandes 17 mäandrierend als Sekundärvlies 19 abgelegt.

In Figur 1 ist schließlich die Drehrichtung einer Antriebsrolle des Förderbands 17 durch den Pfeil 20 dargestellt.

Bei der voranstehend dargestellten Vorrichtung ist vorgesehen, dass das Primärvlies im Bereich der Rollenbahn 3 einen hohen Anteil unausgehärtetes und feuchtes Bindemittel sowie sonstige Zusatzmittel als Imprägnierungsmittel aufweist. Das auf dem Förderband 17 abgelegte Sekundärvlies 19 wird sodann nicht näher dargestellten weiteren Bearbeitungsstationen zugeführt, in denen beispielsweise die Ränder des Sekundärvlieses 19 besäumt und das Sekundärvlies insgesamt sowohl in Längsrichtung, d.h. in Förderrichtung auf dem Förderband 17 als auch in Richtung der Flächennormalen der im Sekundärvlies 19 gebildeten großen Ober flächen komprimiert wird. Abschließend wird das Sekundärvlies 19 einem nicht näher dargestellten Härteofen zugeführt, in dem das Bindemittel ausgehärtet wird.

Im Ausführungsbeispiel gemäß Figur 1 stellt der Übergang zwischen der Rollenbahn 3 und der Umlenk- und Zugrolle 10 eine erste Bearbeitungsstation 21 und der Bereich zwischen der Umlenk- und Zugrolle 10 und den gegenüberliegend angeordneten Walzen 12 eine zweite Bearbeitungsstation 22 dar, wobei das Primärvlies 5 in der ersten Bearbeitungsstation 21 gestreckt und in der zweiten Bearbeitungsstation 22 komprimiert wird. Die Bearbeitungsstationen 21, 22 sind zwischen der nicht näher dargestellten Zerfaserungseinrichtung und dem Härteofen angeordnet.

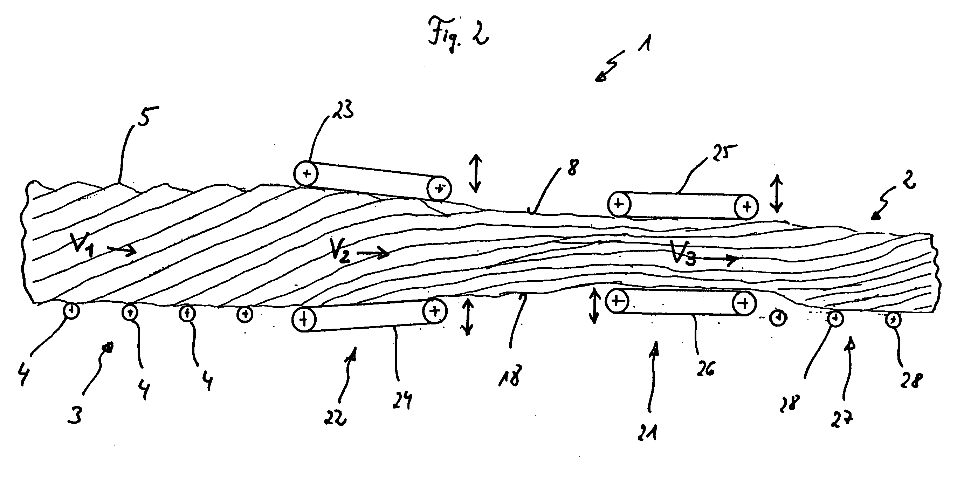

Eine zweite Ausführungsform einer Vorrichtung 1 ist abschnittsweise in Figur 2 dargestellt. Bei dieser zweiten Ausführungsform der Vorrichtung 1 gemäß Figur 2 ist eine Rollenbahn 3 mit mehreren Rollen 4 vorgesehen, auf denen ein Primärvlies 5 mit einer ersten Fördergeschwindigkeit V₁ gefördert wird.

An die Rollenbahn 3 schließt sich eine Bearbeitungsstation 22 an, in der das Primärvlies 5 zwischen zwei Förderbändern 23 und 24 komprimiert wird. Zwischen den Förderbändern 23 und 24 wird das Primärvlies 5 mit einer Fördergeschwindigkeit V₂ gefördert, die kleiner ist, als die Fördergeschwindigkeit V₁, so dass das Primärvlies 5 durch die Verringerung der Fördergeschwindigkeit von der Fördergeschwindigkeit V₁ auf die Fördergeschwindigkeit V₂ in seiner Längsrichtung und damit auch in Förderrichtung gestaucht wird.

Die Förderbänder 23 und 24 sind ausgangsseitig in ihrem Abstand zueinander einstellbar, so dass sich zwischen den Förderbändern 23, 24 ausgangsseitig ein Förderschlitz ergibt, dessen Höhe auf die gewünschte Kompression des Primärvlieses 5 einstellen lässt.

Im Abstand zur Bearbeitungsstation 22 ist in Förderrichtung eine Bearbeitungsstation 21 angeordnet, die wiederum aus zwei Förderbändern 25 und 26 besteht, welche Förderbänder auf den großen Oberflächen 8, 18 des komprimierten Primärvlieses 5 aufliegen und zugübertragend auf das Primärvlies 5 wirken.

Zur Optimierung der Zugübertragung sind die beiden Förderbänder 25 und 26 der Bearbeitungsstation 21 in ihrem Abstand zueinander einstellbar.

Das Primärvlies 5 wird im Bereich der Bearbeitungsstation 21 mit einer Fördergeschwindigkeit V₃ gefördert, die größer ist, als die Fördergeschwindigkeit V₂. Demzufolge wird das Primärvlies 5 im Bereich zwischen den Bearbeitungsstationen 21 und 22 durch die unterschiedlichen Fördergeschwindigkeiten V₃ und V₂ in den Bearbeitungsstationen 21 und 22 gestreckt.

Im Anschluss an die Bearbeitungsstation 21 wird das Primärvlies 5 als Mineralfaserbahn 2 auf eine Fördereinrichtung 27 übergeben, die wiederum eine Vielzahl von Rollen 28 aufweist, auf denen Primärvlies 5 bzw. die Mineralfaserbahn 2 aufliegt und gefördert wird. Im Bereich zwischen den Bearbeitungsstationen 21 und 22 ist das Primärvlies 5 frei beweglich und insbesondere nicht durch eine Fördereinrichtung unterstützt. Hierdurch werden Reibungsverluste durch eine auf einer Fördereinrichtung aufliegende große Oberfläche 18 vermieden, die gegebenenfalls zu einer ungleichmäßigen Streckung des Primärvlieses 5 über die Materialstärke der Mineralfaserbahn 2 führen könnten.

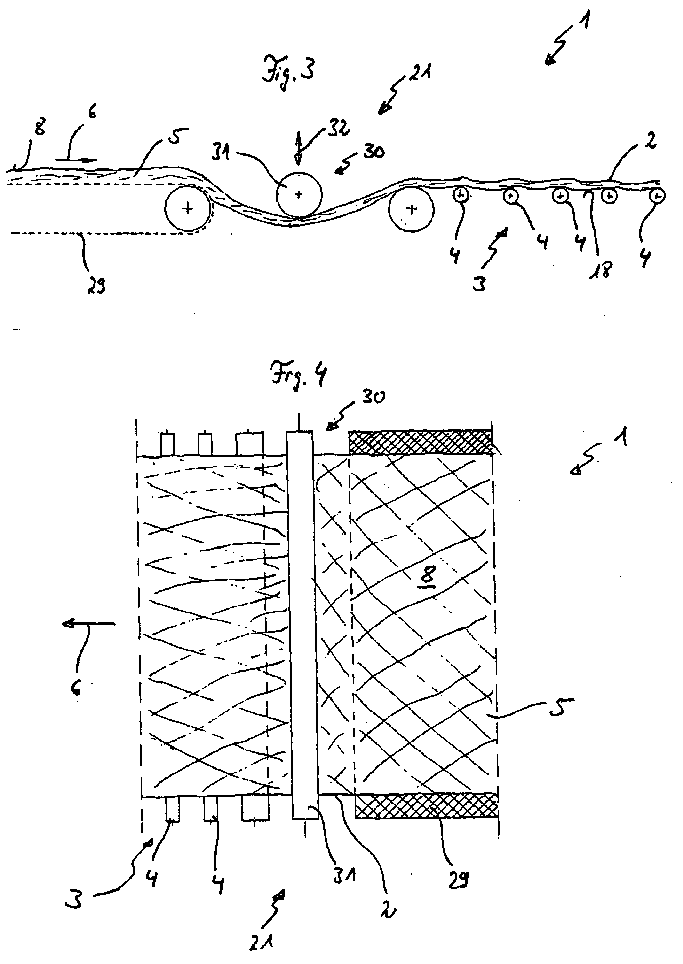

Figur 3 zeigt eine weitere Ausführungsform eines Abschnitts einer Vorrichtung 1 zur Herstellung einer Mineralfaserbahn 2 in schematisch dargestellter Seitenansicht. Dargestellt ist die Bearbeitungsstation 21, die aus einem Förderband 29 und einer sich in Förderrichtung gemäß Pfeil 6 anschließenden Rollenbahn 3 mit einzelnen Rollen 4 besteht. Zwischen dem Förderband 29 und der Rollenbahn 3 ist ein Bereich angeordnet, in der das Primärvlies 5 weder vom Förderband 29, noch von den Rollen 4 der Rollenbahn 3 unterstützt und demnach freihängend angeordnet ist. In diesem Bereich weist die Vorrichtung 1 ein Druckelement 30 in Form einer Rolle 31 auf, welche Rolle 31 entsprechend dem Pfeil 32 rechtwinklig zur großen Oberfläche 8 des Primärvlieses 5 bewegbar ist. Die Rolle 31 ist angetrieben und erzeugt eine gleichmäßige Zugspannung im Primärvlies 5.

Die Streckung des Primärvlieses 5 kann bei der Ausführungsform gemäß Figur 3 durch die Rolle 31 ausgeführt werden. Ergänzend kann aber auch vorgesehen sein, dass die Fördergeschwindigkeit der Rollenbahn 4 gegenüber der Fördergeschwindigkeit des Förderbands 29 erhöht ist.

In Figur 4 ist durch die Schraffur des Primärvlieses 5 zu erkennen, dass dieses Primärvlies 5 im Bereich der Rollenbahn 3 gegenüber dem Bereich des Primärvlieses 5 auf dem Förderband 29 in seiner Längsrichtung gestreckt ist. Ferner ist darauf hinzuweisen, dass das Förderband 29 luftdurchlässig ausgebildet ist, um beispielsweise einen Unterdruck auf der das Primärvlies 5 tragenden Oberfläche des Förderbands 29 auszubilden, so dass die Haftreibung auf diesem Förderband 29 erhöht wird.

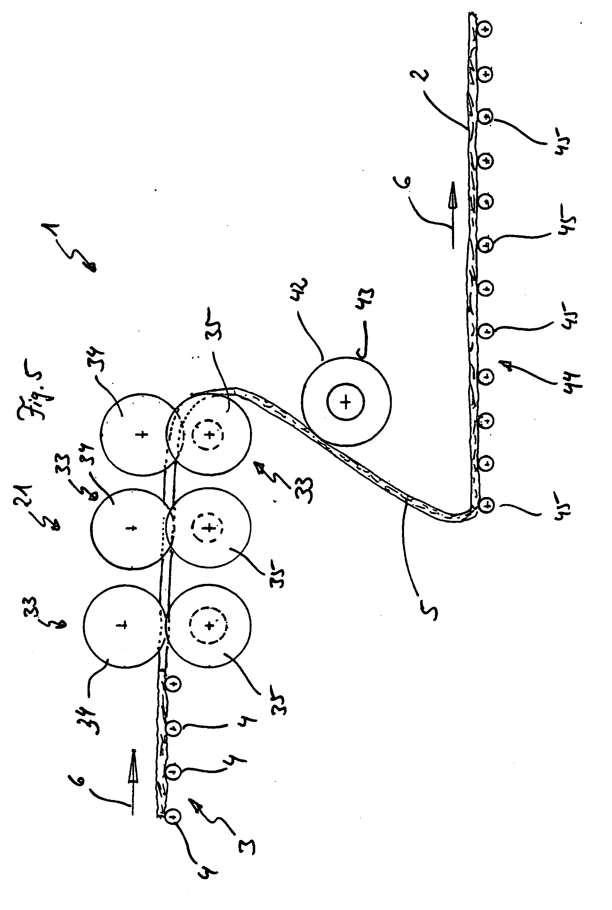

In den Figuren 5 bis 7 ist eine Vorrichtung 1 dargestellt, mit der eine Mineralfaserbahn 2, nämlich ein Primärvlies 5 quer zu seiner Längsrichtung gestreckt wird. Ausgehend von der Rollenbahn 3 wird das Primärvlies 5 in eine erste Bearbeitungsstation 21 gefördert, die drei Rollensätze 33 mit jeweils einer oberen Rolle 34 und einer unteren Walze 35 aufweisen. Die Rollen 34 und die Walzen 35 sind angetrieben und in ihrem Abstand zueinander einstellbar.

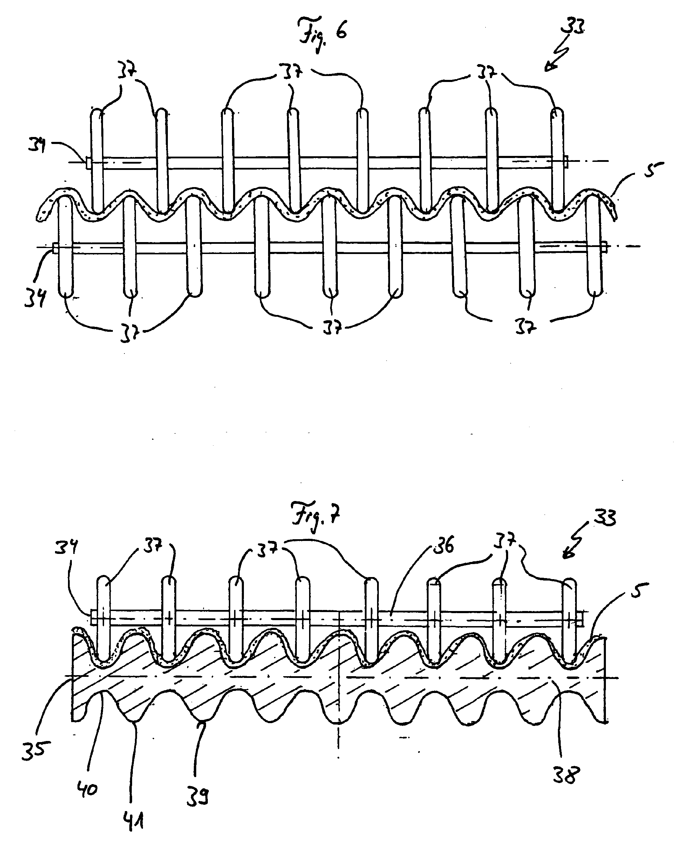

Die Ausgestaltung der Rollen 34 und der Walzen 35 ergibt sich aus Figur 7, wobei Figur 6 eine alternative Ausgestaltung zeigt.

Jede Rolle 34 besteht aus einer Achse 36, auf der mehrere Scheiben 37 drehfest angeordnet sind. Die Scheiben 37 sind über die Länge der Achse 36 in gleichmäßigen Abständen verteilt angeordnet.

Der Rolle 34 gegenüberliegend angeordnet ist die Walze 35, die aus einem Walzenkörper 38 besteht, der im Bereich seiner Mantelfläche 39 profiliert ausgebildet ist und alternierend Vertiefungen 40 sowie Vorsprünge 41 hat. Die Vertiefungen 40 sind in Bereichen der Mantelflächen 39 angeordnet, die den Scheiben 37 der Rolle 34 gegenüberliegend angeordnet sind. Demzufolge können die Scheiben 37 in die Vertiefungen 40 der Walze 35 eingreifen und das Primärvlies 5 in diesen Bereichen komprimieren.

Die in Figur 6 dargestellte alternative Ausgestaltung eines Rollensatzes 33 besteht aus zwei gegenüberliegend angeordneten Rollen 34, deren Ausgestaltung mit der Ausgestaltung der Rolle 34 in Figur 7 übereinstimmt, so dass auf die voranstehende Beschreibung Bezug genommen werden kann.

Die Scheiben 37 der gegenüberliegend angeordneten Rollen 34 sind derart angeordnet, dass die Scheiben 37 der oberen Rolle 34 in den Bereich zwischen zwei Scheiben 37 der unteren Rolle 34 eingreifen, wobei der Eingriff mittig erfolgt. Gleiches gilt selbstverständlich auch hinsichtlich des Eingriffs der Scheiben 37 der unteren Rolle 34 zwischen die Scheiben 37 der oberen Rolle 34. Es ist zu erkennen, dass die Scheiben 37 der unteren Rolle 34 dicker ausgebildet sind, als die Scheiben 37 der oberen Rolle 34.

Bei der Ausführungsform der Vorrichtung 1 gemäß Figur 5 ist zu erkennen, dass das Ineinandergreifen der Rollen 34 bzw. Walzen 35 in Förderrichtung gemäß Pfeil 6 mit größerer Eingriffsstärke ineinander eingreifen.

Das Primärvlies 5 wird im Anschluss an das Verlassen des letzten Rollensatzes 33 aus seiner horizontal ausgerichteten Förderrichtung lotrecht ausgerichtet und läuft auf eine Walze 42 auf, die eine konvexe Mantelfläche 43 hat. Die Walze 42 ist relativ zur Mineralfaserbahn 2 bzw. zum Primärvlies 5 pendelnd bewegbar und dient dazu, die in der ersten Bearbeitungsstation 21 in das Primärvlies eingebrachten Falten zu strecken, so dass das Primärvlies 5 eine gegenüber dem Bereich vor der ersten Bearbeitungsstation 21 größere Breite aufweist. Das Primärvlies 5 wird anschließend als Mineralfaserbahn 2 auf einer zweiten Rollenbahn 44 mit weiteren Rollen 45 abgelegt. Von dieser Rollenbahn 44 wird das Primärvlies zu einer nicht näher dargestellten Pendeleinrichtung gefördert. Eine derartige Pendeleinreichtung mit der Bezugsziffer 13 ist in Figur 1 dargestellt.

Schließlich zeigen die Figuren 1 bis 10 exemplarische Ausgestaltungen von Dämmstoffelementen 46. In Figur 8 ist ein Primärvlies 5 im Querschnitt dargestellt, welches aus mit Bindemitteln gebundenen Mineralfasern besteht und zwei große Oberflächen 8 und 18 aufweist, die parallel zueinander ausgerichtet und im Abstand zueinander angeordnet sind. Die beiden großen Oberflächen 8, 18 sind über Seitenflächen 47 miteinander verbundenen, die relativ zu den großen Oberflächen 8, 18 rechtwinklig verlaufend angeordnet sind und sich in Längsachsenrichtung des Primärvlieses 5 erstrecken. Das Primärvlies 5 weist zwei Randbereiche 48 auf, die im Vergleich zu dem Bereich zwischen den Randbereichen 48 quer zur Längsrichtung des Primärvlieses 5 gestreckt ausgebildet sind, so dass die Mineralfasern in diesem Bereich im wesentlichen parallel zu den großen Oberflächen 8 bzw. 18 ausgerichtet und aufgelockert sind.

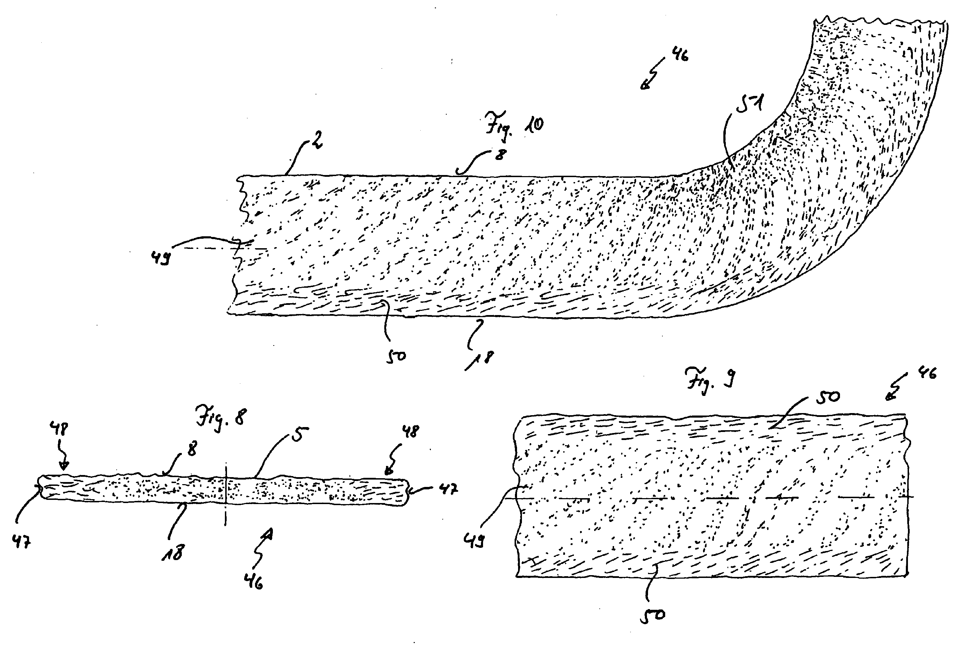

In Figur 9 ist ein Dämmstoffelement 46 dargestellt, welches aus dem Primärvlies 5 gemäß Figur 8 hergestellt ist. Dieses Dämmstoffelement 46 weist einen Kernbereich 49 auf, an dem sich beidseitig Oberflächenbereiche 50 anschließen, die unmittelbar unterhalb großer Oberflächen 8, 18 angeordnet sind. Im Kernbereich 49 weist das Dämmstoffelement 46 einen Verlauf der Mineralfasem rechtwinklig bzw. steil zu den großen Oberflächen 8, 18 auf, während der Verlauf der Mineralfasern in den Oberflächenbereichen 50 im wesentlichen parallel zu den großen Oberflächen 8 ,18 ausgerichtet ist. Die Oberflächenbereiche 50 sind gestreckt ausgebildet.

Schließlich zeigt Figur 10 ein Dämmstoffelement 46 in Form einer wickelbaren Mineralfaserbahn 2, die einen Kernbereich 49 und eine Oberflächenzone 50 aufweist, wobei die Oberflächenzone 50 als partiell gestreckte Zugzone ausgebildet ist. In dem Kernbereich 49 verlaufen die Mineralfasern im wesentlichen parallel zu den großen Oberflächen 8, 18, wobei der Verlauf der Mineralfasern quer zur Längserstreckung des Dämmstoffelementes 46 ausgerichtet ist. Im Wickel innenliegend bildet sich eine Druckzone 51 aus, die Mineralfasern mit parallel zu den großen Oberflächen 8, 18 ausgebildeten Verlauf hat.

Die in Figur 10 dargestellte Mineralfasernbahn 2 weist sich durch eine hohe Biegefähigkeit und damit Wickelbarkeit aus.

## Patentansprüche

1. Verfahren zur Herstellung von bahnen- oder plattenförmigen Dämmstoffen aus Mineralfasern, vorzugsweise aus mit Bindemitteln gebundener Steinwolle, bei dem eine silikatische Schmelze in einem Schmelzaggregat hergestellt und in einer Zerfaserungseinrichtung zu insbesondere mikrofeinen Mineralfasem zerfasert wird, anschließend die Mineralfasern, vorzugsweise unter Hinzufügung eines Binde- und/oder Imprägnierungsmittels, auf einer Fördereinrichtung als Mineralfaserbahn abgelegt werden, die Mineralfaserbahn sodann formgebend bearbeitet und schließlich einem Härteofen zugeführt wird,
**dadurch gekennzeichnet,**
**dass** die Mineralfaserbahn (2) vor der Zuführung zum Härteofen in einer ersten Bearbeitungsstation (21) in Längsrichtung bzw. in Förderrichtung und /oder einer von der Längsrichtung bzw. Förderichtung abweichenden, vorzugsweise rechtwinklig zur Längsrichtung bzw. Förderrichtung verlaufenden Richtung gestreckt wird.

2. Verfahren nach Anspruch 1,
**dadurch gekennzeichnet,**
**dass** die Mineralfaserbahn (2) in einer der ersten Bearbeitungsstation (21) vorgeschalteten zweiten Bearbeitungsstation (22) in Längsrichtung bzw. Förderichtung gestaucht wird.

3. Verfahren nach Anspruch 1 oder 2,
**dadurch gekennzeichnet,**
**dass** die Streckung und/oder die Stauchung der Mineralfaserbahn (2) durch eine gegenüber der Fördergeschwindigkeit der Mineralfaserbahn (2) in den Bearbeitungsstationen (21, 22) erhöhte oder reduzierte Fördergeschwindigkeit erzielt wird.

4. Verfahren nach Anspruch 1 oder 2,
**dadurch gekennzeichnet,**
**dass** die Streckung und/oder Stauchung der Mineralfaserbahn (2) unmittelbar nach der Zerfaserungseinrichtung durchgeführt wird.

5. Verfahren nach Anspruch 1,
**dadurch gekennzeichnet,**
**dass** die Mineralfaserbahn (2) im Anschluss an die Zerfaserungseinrichtung als Primärvlies (5) einer pendelnden Fördereinrichtung (13) zugeführt wird, in der das Primärvlies (5) gestreckt wird, bevor das Primärvlies (5) als Sekundärvlies (19) auf einer der pendelnden Fördereinrichtung (13) nachgeschalteten Fördereinrichtung (17) mäandrierend abgelegt wird.

6. Verfahren nach Anspruch 1,
**dadurch gekennzeichnet,**
**dass** die Mineralfaserbahn (2) in Teilbereichen ihrer großen Oberflächen (8, 18) durch die Übertragung unterschiedlich hoher Zugkräfte gestreckt wird.

7. Verfahren nach Anspruch 1,
**dadurch gekennzeichnet,**
**dass** die für die Streckung der Mineralfaserbahn (2) erforderliche und übertragene Zugkraft über Drucksensoren gemessen wird.

8. Verfahren nach Anspruch 1,
**dadurch gekennzeichnet,**
**dass** die Mineralfaserbahn (2) kontinuierlich um ein Maß von ca. 5 bis 20 %, insbesondere 5 bis 12 % bezogen auf eine Längeneinheit gestreckt wird.

9. Verfahren nach Anspruch 1,
**dadurch gekennzeichnet,**
**dass** die Mineralfaserbahn (2), insbesondere das Primärvlies (5) vor der ersten Bearbeitungsstation (21) in Richtung auf ihre großen Oberflächen (8, 18) komprimiert wird.

10. Verfahren nach Anspruch 1,
**dadurch gekennzeichnet,**
**dass** die Mineralfaserbahn (2) während der Streckung ergänzend komprimiert wird.

11. Verfahren nach Anspruch 9 oder 10,
**dadurch gekennzeichnet,**
**dass** die Mineralfaserbahn (2) auf ein Kompressionsmaß von bis zu 50% einer ursprünglichen Materialstärke komprimiert wird.

12. Verfahren nach Anspruch 1,
**dadurch gekennzeichnet,**
**dass** die gestreckte Mineralfaserbahn (2) zur Schließung von Rissen oder anderen Öffnungen geringfügig um ein Schubmaß zusammengeschoben wird, wobei das Schubmaß kleiner ist, als das Maß der Streckung.

13. Verfahren nach Anspruch 1,
**dadurch gekennzeichnet,**
**dass** lose Mineralfasern, insbesondere bindemittelfreie Mineralfasern vor der Streckung von zumindest einer großen Oberfläche (8, 18) der Mineralfaserbahn (2) entfernt, insbesondere abgesaugt und/oder abgeblasen werden.

14. Verfahren nach Anspruch 1,
**dadurch gekennzeichnet,**
**dass** zumindest eine der großen Oberflächen (8, 18) der Mineralfaserbahn (2), insbesondere vor einer Stauchung in Förderrichtung mit Bindemittel und Wasser, gegebenenfalls als Gemisch mit Alkohol und/oder Tensiden benetzt wird.

15. Verfahren nach Anspruch 1 oder 14,
**dadurch gekennzeichnet,**
**dass** als Bindemittel Alkohol-Silan-Verbindungen, Kieselsol, Wasserglas, Polyphosphate oder thermoplastische Bindemittel, wie beispielsweise in Wasser dispergierte Polyacrylate verwendet werden.

16. Verfahren nach Anspruch 1,
**dadurch gekennzeichnet,**
**dass** das Bindemittel mit Hochdruckdüsen vorzugsweise als Aerosol auf die Mineralfaserbahn (2) aufgesprüht wird.

17. Verfahren nach Anspruch 1,
**dadurch gekennzeichnet,**
**dass** die Mineralfaserbahn (2) im Bereich der ersten Bearbeitungsstation (21) ergänzend in Richtung ihrer Flächennormalen einer großen Oberfläche (8, 18) mit einer vorzugsweise linienförmig wirkenden Kraft quer zur Längs- bzw. Förderrichtung belastet wird.

18. Verfahren nach Anspruch 17,
**dadurch gekennzeichnet,**
**dass** die Kraft über zumindest eine quer zur Längsrichtung bzw. Förderrichtung der Mineralfaserbahn (2) verlaufende, insbesondere angetriebene Rolle (31) auf die Oberfläche (8) der Mineralfaserbahn (2) übertragen wird, wobei die Mineralfaserbahn (2) aus einer gestreckten Lage in eine schlaufenförmige Lage umgelenkt wird.

19. Verfahren nach Anspruch 17,
**dadurch gekennzeichnet,**
**dass** die Kraft über zumindest einen quer zur Längsrichtung bzw. Förderrichtung der Mineralfaserbahn (2) verlaufenden, insbesondere angetriebenen Rollensatz mit einander gegenüberliegend angeordneten, einen Spalt bildenden Rollen (31) auf die Oberfläche (8) der Mineralfaserbahn (2) übertragen wird.

20. Verfahren nach Anspruch 19,
**dadurch gekennzeichnet,**
**dass** die Mineralfaserbahn (2) zwischen den Rollen (31) des Rollensatzes komprimiert wird.

21. Verfahren nach Anspruch 17,
**dadurch gekennzeichnet,**
**dass** die Mineralfaserbahn (2) im Bereich der ersten Bearbeitungsstation (21) mäandrierend über mehrere Rollen (34) geführt wird.

22. Verfahren nach Anspruch 1,
**dadurch gekennzeichnet,**
**dass** die Mineralfaserbahn (2) im wesentlichen rechtwinklig zu ihrer Längsrichtung bzw. Förderrichtung zumindest in Teilbereichen (48) gestreckt wird.

23. Verfahren nach Anspruch 22,
**dadurch gekennzeichnet,**
**dass** die Mineralfaserbahn (2) durch zumindest einen Rollensatz (33) mit zumindest zwei einander gegenüberliegend angeordneten, einen vorzugsweise einstellbaren Spalt definierenden und jeweils über ihre Mantelfläche Profilierungen aufweisende Rollen (34) geführt wird, wobei die Profilierungen der Rollen (34) in Längsrichtung der Rollen (34) versetzt zueinander angeordnet sind.

24. Verfahren nach Anspruch 22,
**dadurch gekennzeichnet,**
**dass** die Mineralfaserbahn (2) in einem Teilbereich entlang zumindest einer, vorzugsweise beider Längskanten gestreckt wird.

25. Verfahren nach Anspruch 22,
**dadurch gekennzeichnet,**
**dass** die Mineralfaserbahn (2) zumindest in Teilbereichen zumindest einer großen Oberfläche (8, 18) linien- und/oder streifenförmig komprimiert wird.

26. Verfahren nach Anspruch 22,
**dadurch gekennzeichnet,**
**dass** die quer zur Förderrichtung gestreckte Mineralfaserbahn (2) über zumindest eine, vorzugsweise im Bereich ihrer Mantelfläche (43) konvex ausgebildeten Walze (42) geführt wird, mit der eventuelle Faltungen der Mineralfaserbahn (2) entfernt werden.

27. Verfahren nach Anspruch 26,
**dadurch gekennzeichnet,**
**dass** die Walze (42) pendelnd bewegt wird.

28. Verfahren nach Anspruch 1,
**dadurch gekennzeichnet,**
**dass** die Mineralfaserbahn (2) vor der Streckung in ihrer Längs- bzw. Förderichtung in einer Richtung quer, insbesondere annähernd rechtwinklig zur Längs- bzw. Förderrichtung gestreckt wird.

29. Vorrichtung zur Herstellung von bahnen- oder plattenförmigen Dämmstoffen aus Mineralfasem, vorzugsweise aus mit Bindemitteln gebundener Steinwolle, mit einem Schmelzaggregat, einer Zerfaserungseinrichtung, einer Fördereinrichtung und einem Härteofen, wobei in dem Schmelzaggregat eine silikatische Schmelze hergestellt wird, die in der Zerfaserungseinrichtung zu insbesondere mikrofeinen Mineralfasern zerfasert wird, wobei die Mineralfasem anschließend, vorzugsweise unter Hinzufügung eines Binde- und/oder Imprägnierungsmittels, auf der Fördereinrichtung als Mineralfaserbahn abgelegt werden, die Mineralfaserbahn sodann formgebend bearbeitet und schließlich einem Härteofen zugeführt wird,
**dadurch gekennzeichnet,**
**dass** zwischen der Zerfaserungseinrichtung und dem Härteofen eine erste Bearbeitungsstation (21) angeordnet ist, in der die Mineralfaserbahn (2) in Längsrichtung bzw. Förderrichtung und /oder einer von der Längsrichtung bzw. Förderichtung abweichenden, vorzugsweise rechtwinklig zur Längsrichtung bzw. Förderrichtung verlaufenden Richtung gestreckt wird.

30. Vorrichtung nach Anspruch 29,
**dadurch gekennzeichnet,**
**dass** der ersten Bearbeitungsstation (21) eine zweite Bearbeitungsstation (22) vorgeschaltet ist, in der die Mineralfaserbahn (2) in Längsrichtung bzw. Förderrichtung gestaucht wird.

31. Vorrichtung nach Anspruch 29 oder 30,
**dadurch gekennzeichnet,**
**dass** die erste und/oder die zweite Bearbeitungsstation (22) aus zwei parallel und im Abstand zueinander angeordneten, auf großen Oberflächen der Mineralfaserbahn (2) aufliegenden Fördervorrichtungen besteht, die eine gegenüber der Fördereinrichtung (3) höhere oder niedrigere Fördergeschwindigkeit aufweisen.

32. Vorrichtung nach Anspruch 31,
**dadurch gekennzeichnet,**
**dass** die Fördervorrichtungen als Förderbänder (23, 24) und/oder als Walzen (12), insbesondere aus Walzensätzen mit mehreren Walzen (12) ausgebildet sind.

33. Vorrichtung nach Anspruch 29,
**dadurch gekennzeichnet,**
**dass** die erste Bearbeitungsstation (21) als pendelnde Fördereinrichtung (13) ausgebildet ist, mit der eine als Primärvlies (5) ausgebildete Mineralfaserbahn (2) mäandrierend als Sekundärvlies (19) auf einer nachgeschalteten Fördereinrichtung (17) ablegbar ist.

34. Vorrichtung nach Anspruch 33,
**dadurch gekennzeichnet,**
**dass** der pendelnden Fördereinrichtung (13) eine Komprimiereinrichtung vorgeschaltet ist, die aus eine Umlenkwalze (10) und einem gegenüberliegenden Walzensatz besteht.

35. Vorrichtung nach Anspruch 33,
**dadurch gekennzeichnet,**
**dass** die nachgeschaltete Fördereinrichtung (17) rechtwinklig zur Fördereinrichtung (3) vor der ersten Bearbeitungsstation (21) verlaufend ausgerichtet ist, so dass das Primärvlies (5) rechtwinklig zur Förderrichtung der nachgeschalteten Fördereinrichtung (17) als Sekundärvlies (19) mäandrierend ablegbar ist.

36. Vorrichtung nach Anspruch 29,
**dadurch gekennzeichnet,**
**dass** die Fördervorrichtungen auf Teilbereichen der großen Oberfläche (8, 18) der Mineralfaserbahn (2) aufliegen.

37. Vorrichtung nach Anspruch 29,
**dadurch gekennzeichnet,**
**dass** die Fördervorrichtungen als gerippte, glatte und/oder gezahnte Förderbänder (25, 26) und/oder Förderwalzen (12) ausgebildet sind.

38. Vorrichtung nach Anspruch 29,
**dadurch gekennzeichnet,**
**dass** der ersten Bearbeitungsstation (21) eine Absaug- und/oder Gebläsestation (7) vorgeschaltet, mit der lose Mineralfasem von zumindest einer großen Oberfläche (8) der Mineralfaserbahn (2) entfernbar sind.

39. Vorrichtung nach Anspruch 29,
**dadurch gekennzeichnet,**
**dass** die erste Bearbeitungsstation (21) eine Sprüheinrichtung mit zumindest zwei Hochdruckdüsen aufweist, mit der Bindemittel auf zumindest eine große Oberfläche (8) der gestreckten Mineralfaserbahn (2) aufbringbar ist.

40. Vorrichtung nach Anspruch 29,
**dadurch gekennzeichnet,**
**dass** die erste Bearbeitungsstation (21) ein Druckelement (30) aufweist, welches eine Kraft vorzugsweise linienförmig und quer zur Längs- bzw. Förderrichtung auf die große Oberfläche (8, 18) der Mineralfaserbahn (2) überträgt.

41. Vorrichtung nach Anspruch 40,
**dadurch gekennzeichnet,**
**dass** das Druckelement (30) als insbesondere eine, vorzugsweise angetriebene Rolle (31) oder als Rollensatz mit zumindest zwei einander gegenüberliegenden, einen Spalt bildenden Rollen (31) ausgebildet ist.

42. Vorrichtung nach Anspruch 29,
**dadurch gekennzeichnet,**
**dass** der ersten Bearbeitungsstation (21) eine Einrichtung zur Streckung der Mineralfaserbahn (2) quer, insbesondere annähernd rechtwinklig zur Längs- bzw. Förderrichtung vorgeschaltet ist.

43. Vorrichtung nach Anspruch 29,
**dadurch gekennzeichnet,**
**dass** die Einrichtung zumindest einen Rollensatz (33) mit zumindest zwei einander gegenüberliegend angeordneten Rollen (34, 35) aufweist, die auf ihren Mantelflächen Profilierungen aufweisen.

44. Vorrichtung nach Anspruch 43,
**dadurch gekennzeichnet,**
**dass** die Profilierungen einander gegenüberliegender Rollen (34, 35) der Rollensätze (33) ineinander greifen.

45. Vorrichtung nach Anspruch 43,
**dadurch gekennzeichnet,**
**dass** die Profilierung zumindest einer Rolle (35) wellenförmig ausgebildet ist.

46. Vorrichtung nach Anspruch 42,
**dadurch gekennzeichnet,**
**dass** der Einrichtung zumindest eine, vorzugsweise eine konvexe Mantelfläche (43) aufweisende Walze (44) nachgeschaltet ist, die insbesondere relativ zur Mineralfaserbahn (2) pendelnd gelagert ist.

47. Dämmstoffelement, insbesondere wickelbare Mineralfaserbahn (2), bestehend aus zumindest mit Bindemitteln gebundenen Mineralfasem, vorzugsweise aus Steinwolle, mit einem große Oberflächen (8, 18) aufweisenden Kernbereich (49) und zwei sich beidseitig im Bereich der großen Oberflächen (8, 18) an den Kernbereich (49) anschließenden Oberflächenbereichen (50), wobei der Kernbereich (49) einen Verlauf der Mineralfasern im wesentlichen rechtwinklig und/oder steil zu den großen Oberflächen (8, 18) aufweist, während die Oberflächenbereiche (50) einen Verlauf der Mineralfasem parallel zu den großen Oberflächen (8, 18) aufweisen und wobei die Mineralfasern in zumindest einem Oberflächenbereich (50) in einer Zugrichtung deutlich gestreckt angeordnet sind.

48. Dämmstoffelement nach Anspruch 47,
**dadurch gekennzeichnet,**
**dass** ein Oberflächenbereich (50), nämlich der im Wickel außen liegende Oberflächenbereich (50) gestreckt und der zweite Oberflächenbereich (50), nämlich der im Wickel innen liegende Oberflächenbereich (50) gestaucht ausgebildet ist.

49. Dämmstoffelement nach Anspruch 47,
**dadurch gekennzeichnet,**
**dass** die in Längsrichtung der Mineralfaserbahn (2) verlaufenden Randbereiche (48) gestreckt ausgebildet sind.

50. Dämmstoffelement nach Anspruch 47,
**dadurch gekennzeichnet,**
**dass** in den großen Oberflächen (8, 18) linien- oder streifenförmige Bereiche mit erhöhter Rohdichte ausgebildet sind, die in Längsrichtung und/oder quer dazu verlaufend angeordnet sind.

51. Dämmstoffelement, insbesondere Primärvlies (5), bestehend aus zumindest mit Bindemitteln gebundenen Mineralfasern, vorzugsweise aus Steinwolle, mit zwei großen Oberflächen (8, 18) und rechtwinklig dazu ausgerichteten Seitenflächen (47), wobei die Mineralfasem einen Verlauf im wesentlichen parallel zu den großen Oberflächen (8, 18) aufweisen,
**dadurch gekennzeichnet,**
**dass** die Mineralfasern in zumindest einem in Längsrichtung verlaufenden Randbereich (48) parallel und/oder quer zur Längsrichtung deutlich gestreckt angeordnet sind.

52. Dämmstoffelement nach Anspruch 51,
**dadurch gekennzeichnet,**
**dass** in den großen Oberflächen (8, 18) linien- oder streifenförmige Bereiche mit erhöhter Rohdichte ausgebildet sind, die in Längsrichtung und/oder quer dazu verlaufend angeordnet sind.

## Claims

1. Method for manufacturing insulating webs or plates from mineral fibers, preferably from binder-bound rock wool, in which method a siliceous melt is prepared in a melting unit and defibered in a defibring unit to form particularly minute mineral fibers, whereafter the mineral fibers are deposited as a mineral fiber web on a conveyor device, preferably under the addition of a binding and/or impregnating agent, and whereafter the mineral fiber web is immediately formed to its shape and finally supplied to a hardening furnace,
**characterized in**
**that** the mineral fiber web (2) prior to being supplied to the hardening furnace is stretched in the longitudinal direction or in the conveying direction and/or in a direction which deviates from the longitudinal direction or the conveying direction and which preferably extends at right angles to the longitudinal direction or conveying direction.

2. Method according to claim 1,
**characterized in**
**that** the mineral fiber web (2) is bulged in the longitudinal direction or conveying direction in a second processing station (22) arranged upstream of the first processing station (21).

3. Method according to claim 1 or 2,
**characterized in**
**that** the stretching and/or bulging of the mineral fiber web (2) is obtained by a conveying speed that is increased or reduced compared to the conveying speed of the mineral fiber web (2) in the processing stations (21, 22).

4. Method according to claim 1 or 2,
**characterized in**
**that** the stretching and/or bulging of the mineral fiber web (2) is effected directly after the defibring unit.

5. Method according to claim 1,
**characterized in**
**that** subsequent to the defibring unit the mineral fiber web (2) is fed as a primary web (5) to a pendulum conveyor device (13) in which the primary web (5) is stretched before the primary web (5) is deposited in a meandering fashion as a secondary web (19) on a conveyor device (17) which is arranged downstream of the pendulum conveyor device (13).

6. Method according to claim 1,
**characterized in**
**that** the mineral fiber web (2) is stretched in partial areas of its major surfaces (8, 18) by the transmission of differently high pulling forces.

7. Method according to claim 1,
**characterized in**
**that** the pulling force which is required for the stretching of the mineral fiber web (2) and which is transmitted is measured through pressure sensors.

8. Method according to claim 1,
**characterized in**
**that** the mineral fiber web (2) is stretched continuously by an amount of approx 5 to 20%, particularly 5 to 12% referred to one unit of length.

9. Method according to claim 1,
**characterized in**
**that** the mineral fiber web (2), especially the primary web (5) is compressed towards the major surfaces (8, 18) thereof before the first processing station (21).

10. Method according to claim 1,
**characterized in**
**that** the mineral fiber web (2) is additionally compressed during the stretching operation.

11. Method according to claim 9 or 10,
**characterized in**
**that** the mineral fiber web (2) is compressed to a degree of compression of up to 50% of an original material thickness.

12. Method according to claim 1,
**characterized in**
**that** for closing disruptions and other openings the stretched mineral fiber web (2) is slightly pushed together by a measure of transverse force, wherein the measure of transverse force is smaller than the measure of stretching.

13. Method according to claim 1,
**characterized in**
**that** prior to the stretching operation loose mineral fibers, especially binder-free mineral fibers are removed, especially sucked off and/or blown off from at least one of the major surfaces (8, 18).

14. Method according to claim 1,
**characterized in**
**that** especially before the bulging operation in the conveying direction at least one of the major surfaces (8, 18) of the mineral fiber web (2) is wetted with binders and water, in case as a mixture with alcohol and/or surfactants.

15. Method according to claim 1 or 14,
**characterized in**
**that** as a binder alcohol-silane compounds, silica sol, water glass, polyphosphates or thermoplastic binders like for instance polyacrylates dispersed in water are used.

16. Method according to claim 1,
**characterized in**
**that** the binder is sprayed onto the mineral fiber web (2) preferably as an aerosol by means of high pressure nozzles.

17. Method according to claim 1,
**characterized in**
**that** in the region of the first processing station (21) the mineral fiber web (2) is additionally loaded in the direction of its surface normal of one major surface (8,18) transversely to the longitudinal or conveying direction by a force acting in a linear fashion.

18. Method according to claim 17,
**characterized in**
**that** the force is transmitted to the surface (8) of the mineral fiber web (2) through at least one roller and especially a driven roller (31) extending transversely to the longitudinal direction or conveying direction of the mineral fiber web (2), wherein the mineral fiber web (2) is changed from a stretched position to a loop-like position.

19. Method according to claim 17,
**characterized in**
**that** the force is transmitted to the surface (8) of the mineral fiber web (2) through at least one and especially a driven roller set extending transversely to the longitudinal direction or conveying direction of the mineral fiber web (2) and including mutually oppositely arranged rollers (31) which form a gap therebetween.

20. Method according to claim 19,
**characterized in**
**that** the mineral fiber web (2) is compressed between the rollers (31) of the roller set.

21. Method according to claim 17,
**characterized in**
**that** in the region of the first processing station (21) the mineral fiber web is guided in a meandering fashion over several rollers (34).

22. Method according to claim 1,
**characterized in**
**that** the mineral fiber web (2) is stretched substantially at right angles to its longitudinal direction or conveying direction, at least in partial areas (48).

23. Method according to claim 22,
**characterized in**
**that** the mineral fiber web (2) is guided by at least one roller set (33) including at least two mutually oppositely arranged rollers (34) which define a preferably adjustable gap there between and each of them having profiles on the surface area thereof, wherein the profiles of the rollers (34) are arranged in a mutually staggered fashion in the longitudinal direction of the rollers (34).

24. Method according to claim 22,
**characterized in**
**that** the mineral fiber web (2) is stretched in a partial area along at least one and preferably along both longitudinal edges.

25. Method according to claim 22,
**characterized in**
**that** the mineral fiber web (2) is compressed in a linear and/or strip-like fashion at least in partial areas of at least one major surface (8, 18).

26. Method according to claim 22,
**characterized in**
**that** the mineral fiber web (2) that has been stretched transversely to the conveying direction is passed over at least one cylinder (42) which is convexly formed preferably in the region of its surface area (43), by means of which cylinder (42) possible folds of the mineral fiber web (2) are removed.

27. Method according to claim 26,
**characterized in**
**that** the cylinder (42) is moved in a pendulum fashion.

28. Method according to claim 1,
**characterized in**
**that** prior to the stretching operation in its longitudinal or conveying direction the mineral fiber web (2) is stretched in a direction transversely to and especially almost at right angles to the longitudinal or conveying direction.

29. Apparatus for manufacturing insulating webs or plates from mineral fibers, preferably from binder-bound rock wool, comprising a melting unit, a defibring unit, a conveyor device and a hardening furnace, wherein a siliceous melt is prepared in a melting unit which is defibered in a defibring unit to form particularly minute mineral fibers, whereafter the mineral fibers are deposited as a mineral fiber web on a conveyor device, preferably under the addition of a binding and/or impregnating agent, and whereafter the mineral fiber web is immediately formed to its shape and finally supplied to a hardening furnace,
**characterized in**
**that** between the defibring unit and the hardening furnace a first processing station (21) is arranged in which the mineral fiber web (2) is stretched in the longitudinal direction or conveying direction and/or in a direction which deviates from the longitudinal direction or conveying direction and which preferably extends at right angles to the longitudinal direction or conveying direction.

30. Apparatus according to claim 1,
**characterized in**
**that** upstream of the first processing station (21) a second processing station (22) is arranged in which the mineral fiber web (2) is bulged in the longitudinal or conveying direction.

31. Apparatus according to claim 29 or 30,
**characterized in**
**that** the first and/or the second processing station (22) consists of two parallel and mutually spaced conveyor devices that rest on major surfaces of the mineral fiber web (2) and which have a conveying speed which is higher or lower compared to that of the conveyor device (3).

32. Apparatus according to claim 31,
**characterized in**
**that** the conveyor devices are formed as conveyor belts (23, 24) and/or cylinders (12), particularly as cylinder sets comprising several cylinders (12).

33. Apparatus according to claim 29,
**characterized in**
**that** the first processing station (21) is formed as a pendulum conveyor device (13), by means of which a mineral fiber web (2) formed as a primary web (5) can be deposited in a meandering fashion as a secondary web (19) on a downstream conveyor device (17).

34. Apparatus according to claim 33,
**characterized in**
**that** upstream of the conveyor device (13) a compressing device is arranged which consists of a deflection roller (10) and an opposite roller set.

35. Apparatus according to claim 33,
**characterized in**
**that** the downstream conveyor device (17) is oriented to extend at right angles to the conveyor device (3) before the first processing station (21), so that the primary web (5) can be deposited as a secondary web (19) in a meandering fashion at right angles to the downstream conveyor device (17).

36. Apparatus according to claim 29,
**characterized in**
**that** the conveyor devices rest on partial areas of the major surface (8, 18) of the mineral fiber web (2).

37. Apparatus according to claim 29,
**characterized in**
**that** the conveyor devices are formed as ribbed, even and/or toothed conveyor belts (25, 26) and/or conveyor cylinders (12).

38. Apparatus according to claim 29,
**characterized in**
**that** upstream of the first processing station (21) an extraction and/or blower station (7) is arranged, by means of which loose mineral fibers can be removed from at least one major surface (8) of the mineral fiber web (2).

39. Apparatus according to claim 29,
**characterized in**
**that** the first processing station (21) includes a spraying device with at least two high-pressure nozzles, by means of which binders can be applied to at least one major surface (8) of the stretched mineral fiber web (2).

40. Apparatus according to claim 29,
**characterized in**
**that** the first processing station (21) includes a pressure element (30) which transmits a force to the large surface (8, 18) of the mineral fiber web (2) preferably in a linear fashion and transversely to the longitudinal or conveying direction.

41. Apparatus according to claim 40,
**characterized in**
**that** the pressure element (30) is formed as a roller and preferably as a driven roller (31) or as a set of rollers including at least two mutually oppositely arranged rollers (31) which form a gap there between.

42. Apparatus according to claim 29,
**characterized in**
**that** upstream of the first processing station (21) a device for stretching the mineral fiber web (2) transversely and particularly almost at right angles to the longitudinal or conveying direction is arranged.

43. Apparatus according to claim 29,
**characterized in**
**that** the device includes at least one roller set (33) including at least two mutually oppositely arranged rollers (34, 35) which include profiles on the surface area thereof.

44. Apparatus according to claim 43,
**characterized in**
**that** the profiles of mutually opposite rollers (34, 35) of the roller sets (33) engage with each other.

45. Apparatus according to claim 43,
**characterized in**
**that** the profile of at least one roller (35) is formed in a wave-like fashion.

46. Apparatus according to claim 42,
**characterized in**
**that** downstream of the device at least one cylinder (44) is arranged which preferably has a convex surface area and which is supported particularly in a pendulum fashion with respect to the mineral fiber web (2).

47. Insulating element, in particular a mineral fiber web (2) that can be rolled up, consisting of at least binder-bound mineral fibers, preferably from rock wool, including a core area (49) having major surfaces (8, 18) and including surface parts (50) adjacent to both sides of the core area (49) in the region of the major surfaces (8, 18), wherein the core area (49) includes an orientation of the mineral fibers substantially at right angles and/or steeply inclined to the major surfaces (8, 18), whereas the surface parts (50) include an orientation of the mineral fibers parallel to the major surfaces (8, 18) and wherein the mineral fibers are arranged clearly stretched in one pulling direction in at least one surface part (50).

48. Insulating element according to claim 47,
**characterized in**
**that** one surface part (50), namely the surface part (50) which is on the outside of the lap roll, is formed in a stretched fashion and the second surface part (50), namely the surface part (50) which is on the inside of the lap roll, is formed in a bulged fashion.

49. Insulating element according to claim 47,
**characterized in**
**that** rim portions (48) extending in the longitudinal direction of the mineral fiber web (2) are formed in a stretched fashion.

50. Insulating element according to claim 47,
**characterized in**
**that** in the major surfaces (8, 18) linear or strip-like areas with an increased bulk density are formed which are arranged in a longitudinal direction and/or so as to extend transversely thereto.

51. Insulating element, in particular primary web (5), consisting of at least binder-bound mineral fibers, preferably from rock wool, including two major surfaces (8, 18) and lateral surfaces (47) which are oriented at right angles thereto, wherein the mineral fibers have an orientation substantially parallel to the major surfaces (8, 18),
**characterized in**
**that** the mineral fibers are arranged in a clearly stretched fashion parallel and/or transversely to the longitudinal direction in a rim portion (48) extending in the longitudinal direction.

52. Insulating element according to claim 51,
**characterized in**
**that** in the major surfaces (8, 18) linear or strip-like areas with an increased bulk density are formed which are arranged to extend in the longitudinal direction or transversely thereto.

## Revendications

1. Procédé pour la fabrication de matériaux isolants en forme de lés ou de plaques en fibres minérales, de préférence en laine minérale liée à des liants, pour lequel une masse fondue de silicate est produite dans un agrégat de fonte et est défibrée dans un dispositif de défibrage en fibres minérales en particulier microfines, les fibres minérales sont ensuite déposées sur un dispositif de transport en tant que lé de fibres minérales, de préférence en ajoutant un liant et/ou un moyen d'imprégnation, le lé de fibres minérales est ensuite façonné et est ensuite amené à un four de trempe,
**caractérisé en ce**
**que** le lé en fibres minérales (2) est étiré, avant d'être amené au four de trempe dans un premier poste de traitement (21) dans le sens longitudinal ou dans le sens de transport et/ou dans un sens qui diffère du sens longitudinal ou du sens de transport, de préférence à angle droit par rapport au sens longitudinal ou au sens de transport.

2. Procédé selon la revendication 1,
**caractérisé en ce**
**que** le lé en fibres minérales (2) est comprimé dans un second poste de traitement (22) placé en amont du premier poste de traitement (21) dans le sens longitudinal ou le sens de transport.

3. Procédé selon la revendication 1 ou 2,
**caractérisé en ce**
**que** l'étirement et/ou la compression du lé en fibres minérales (2) est obtenu par une vitesse de transport accrue ou réduite par rapport à la vitesse de transport du lé en fibres minérales (2) dans les postes de traitement (21, 22).

4. Procédé selon la revendication 1 ou 2,
**caractérisé en ce**
**que** l'étirement et/ou la compression du lé en fibres minérales (2) est réalisée immédiatement après le dispositif de défibrage.

5. Procédé selon la revendication 1,
**caractérisé en ce**
**que** le lé en fibres minérales (2) est amené après le dispositif de défibrage comme intissé primaire (5) à un dispositif de transport en va-et-vient (13) dans lequel l'intissé primaire (5) est étiré avant que l'intissé primaire (5) soit déposé en formant des méandres comme intissé secondaire (19) sur un dispositif de transport (17) placé en aval du dispositif de transport en va-et-vient (13).

6. Procédé selon la revendication 1,
**caractérisé en ce**
**que** le lé en fibres minérales (2) est étiré dans des zones partielles de ses grandes surfaces (8, 18) par la transmission de forces de traction différemment élevées.

7. Procédé selon la revendication 1,
**caractérisé en ce**
**que** la force de traction nécessaire pour l'étirement du lé en fibres minérales (2) et qui est transmise est mesurée par des détecteurs de pression.

8. Procédé selon la revendication 1,
**caractérisé en ce**
**que** le lé en fibres minérales (2) est étiré continuellement d'une mesure d'environ 5 à 20%, en particulier de 5 à 12% par rapport à une unité de longueur.

9. Procédé selon la revendication 1,
**caractérisé en ce**
**que** le lé en fibres minérales (2), en particulier l'intissé primaire (5), est comprimé avant le premier poste de traitement (21) en direction de ses grandes surfaces (8, 18).

10. Procédé selon la revendication 1,
**caractérisé en ce**
**que** le lé en fibres minérales (2) est comprimé en complément pendant l'étirement.

11. Procédé selon la revendication 9 ou 10,
**caractérisé en ce**
**que** le lé en fibres minérales (2) est comprimé à une mesure de compression alant jusqu'à 50% d'une épaisseur de matériau d'origine.

12. Procédé selon la revendication 1,
**caractérisé en ce**
**que** le lé étiré en fibres minérales (2) est légèrement rassemblé d'une mesure de poussée pour fermer des fissures ou d'autres ouvertures, la mesure de poussée étant inférieure à la mesure de l'étirement.

13. Procédé selon la revendication 1,
**caractérisé en ce**
**que** des fibres minérales en vrac, en particulier des fibres minérales exemptes de liant, sont enlevées avant l'étirement d'au moins une grande surface (8, 18) du lé en fibres minérales (2), en particulier qu'elles sont aspirées et/ou soufflées.

14. Procédé selon la revendication 1,
**caractérisé en ce**
**qu'**au moins l'une des grande surfaces (8, 18) du lé en fibres minérales (2) est humidifiée en particulier avant une compression dans le sens de transport avec du liant et de l'eau, le cas échéant comme mélange avec de l'alcool et/ou des tensides.

15. Procédé selon la revendication 1 ou 14,
**caractérisé en ce**
**que** l'on utilise comme liants des composés d'alcool et de silane, du sol de silice, du verre soluble, des polyphosphates ou des liants thermoplastiques, comme par exemple des polyacrylates dispersés dans de l'eau.

16. Procédé selon la revendication 1,
**caractérisé en ce**
**que** le liant est pulvérisé avec des tuyères haute pression, de préférence comme aérosol, sur le lé en fibres minérales (2).

17. Procédé selon la revendication 1,
**caractérisé en ce**
**que** le lé en fibres minérales (2) est chargé dans la zone du premier poste de traitement (21) en complément en direction de leur verticale d'une grande surface (8, 18) avec une force qui agit de préférence de manière linéaire transversalement par rapport au sens longitudinal ou de transport.

18. Procédé selon la revendication 17,
**caractérisé en ce**
**que** la force est transmise à la surface (8) du lé en fibres minérales (2) par au moins un rouleau (31) en particulier entraîné transversalement par rapport au sens longitudinal ou au sens de transport du lé en fibres minérales (2), le lé en fibres minérales (2) étant renversé d'une position étirée en une position en forme de boucles.

19. Procédé selon la revendication 17,
**caractérisé en ce**
**que** la force est transmise à la surface (8) du lé en fibres minérales (2) par au moins un jeu de rouleaux en particulier entraîné transversalement par rapport au sens longitudinal ou au sens de transport du lé en fibres minérales (2) avec des rouleaux (31) placés l'un en face de l'autre, formant une fente.

20. Procédé selon la revendication 19,
**caractérisé en ce**
**que** le lé en fibres minérales (2) est comprimé entre les rouleaux (31) du jeu de rouleaux.

21. Procédé selon la revendication 17,
**caractérisé en ce**
**que** le lé en fibres minérales (2) est guidé en formant des méandres par plusieurs rouleaux (34) dans la zone du premier poste de traitement (21).

22. Procédé selon la revendication 1,
**caractérisé en ce**
**que** le lé en fibres minérales (2) est étiré substantiellement à angle droit par rapport à son sens longitudinal ou au sens de transport au moins dans des zones partielles (48).

23. Procédé selon la revendication 22,
**caracterisé en ce**
**que** le lé en fibres minérales est guidé par au moins un jeu de rouleaux (33) avec au moins deux rouleaux (34) placés en face l'un de l'autre, définissant une fente de préférence réglable et présentant respectivement sur leur surface d'enveloppe des profilages, les profilages des rouleaux (34) étant placés dans le sens longitudinal des rouleaux (34) en étant décalés l'un par rapport à l'autre.

24. Procédé selon la revendication 22,
**caractérisé en ce**
**que** le lé en fibres minérales (2) est étiré dans une zone partielle le long d'au moins l'une, de préférence des deux arêtes longitudinales.

25. Procédé selon la revendication 22,
**caractérisé en ce**
**que** le lé en fibres minérales (2) est comprimé en forme de lignes et/ou de bandes au moins dans des zones partielles d'au moins une grande surface (8, 18).

26. Procédé selon la revendication 22,
**caractérisé en ce**
**que** le lé en fibres minérales (2) étiré transversalement par rapport au sens de transport est guidé par au moins un cylindre (42), configuré de préférence convexe dans la zone de sa surface d'enveloppe (43), cylindre lavec lequel d'éventuels plis du lé en fibres minérales (2) sont enlevés.

27. Procédé selon la revendication 26,
**caractérisé en ce**
**que** le cylindre (42) est déplacé en va-et-vient.

28. Procédé selon la revendication 1,
**caractérisé en ce**
**que** le lé en fibres minérales (2) est étiré avant l'étirement dans son sens longitudinal ou de transport dans un sens transversalement, en particulier approximativement à angle droit par rapport au sens longitudinal ou de transport.

29. Procédé pour la fabrication de matériaux isolants en forme de lés ou de plaques en fibres minérales, de préférence en laine minérale liée à des liants, avec un agrégat de fonte, un dispositif de défibrage, un dispositif de transport et un four de trempe, une masse fondue de silicate étant fabriquée dans l'agrégat de fonte, masse fondue qui est défibrée dans le dispositif de défibrage en fibres minérales en particulier microfines, les fibres minérales étant déposées ensuite, de préférence en ajoutant un liant et/ou un moyen d'imprégnation, sur le dispositif de transport comme lé en fibres minérales, le lé en fibres minérales étant immédiatement façonné et étant finalement amené à un four de trempe,
**caractérisé en ce**
**qu'**un premier poste de traitemnt (21) est placé entre le dispositif de défibrage et le four de trempe, poste de traitement dans lequel le lé en fibres minérales (2) est étiré dans le sens longitudinal ou de transport et/ou dans un sens qui diffère du sens longitudinal ou du sens de transport, de préférence à angle droit par rapport au sens longitudinal ou au sens de transport.

30. Dispositif selon la revendication 29,
**caractérisé en ce**
**qu'**un second poste de traitement (22), dans lequel le lé en fibres minérales (2) est comprimé dans le sens longitudinal ou dans le sens de transport, est placé en amont du premier poste de traitement (21).

31. Dispositif selon la revendication 29 ou 30,
**caractérisé en ce**
**que** le premier et/ou le second poste de traitement (22) est constitué par deux dispositifs de transport placés parallèlement et espacés l'un de l'autre, reposant sur de grandes surfaces du lé en fibres minérales (2), qui présentent une vitesse de transport plus élevée ou moins élevée par rapport au dispositif de transport (3).

32. Dispositif selon la revendication 31,
**caractérisé en ce**
**que** les dispositifs de transport sont configurés comme des bandes de transport (23, 24) et/ou comme des cylindres (12), en particulier avec des jeux de cylindres avec plusieurs cylindres (12).

33. Dispositif selon la revendication 29,
**caractérisé en ce**
**que** le premier poste de traitement (21) est configuré comme un dispositif de transport en va-et-vient (13) avec lequel un lé en fibres minérales (2) configuré comme un intissé primaire (5) peut être déposé en formant des méandres comme intissé secondaire (19) sur un dispositif de transport (17) placé en aval.

34. Dispositif selon la revendication 33,
**caractérisé en ce**
**qu'**un dispositif de compression qui est composé d'une poulie de renvoi (10) et d'un jeu de cylindres opposé, est placé en amont du dispositif de transport en va-et-vient (13).

35. Dispositif selon la revendication 33,
**caractérisé en ce**
**que** le dispositif de transport placé en aval (17) est orienté à angle droit par rapport au dispositif de transport (3) devant le premier poste de traitement (21) si bien que l'intissé primaire (5) peut être déposé en formant des méandres comme intissé secondaire (19) à angle droit par rapport au sens de transport du dispositif de transport (17) placé en aval.

36. Dispositif selon la revendication 29,
**caractérisé en ce**
**que** les dispositifs de transport reposent sur des zones partielles de la grande surface (8, 18) du lé en fibres minérales (2).

37. Dispositif selon la revendication 29,
**caractérisé en ce**
**que** les dispositifs de transport sont configurés comme des bandes de transport (25, 26) nervurées, lisses et/ou dentées et/ou comme des cylindres de transport (12).

38. Dispositif selon la revendication 29,
**caractérisé en ce**
**qu'**un poste d'aspiration et/ou un poste de soufflage (7), avec lequel des fibres minérales mobiles peuvent être enlevées d'au moins une grande surface (8) du lé en fibres minérales (2), est placé en amont du premier poste de traitement (21).

39. Dispositif selon la revendication 29,
**caractérisé en ce**
**que** le premier poste de traitement (21) présente un dispositif de pulvérisation avec au moins deux tuyères haute pression avec lequel un liant peut être apliqué sur au moins une grande surface (8) du lé étiré en fibres minérales (2).

40. Dispositif selon la revendication 29,
**caractérisé en ce**
**que** le premier poste de traitement (21) présente un élément de pression qui transmet une force de préférence linéaire et transversalement par rapport au send longitudinal ou de transport à la grande surface (8, 18) du lé en fibres minérales (2).

41. Dispositif selon la revendication 40,
**caractérisé en ce**
**que** l'élément de pression (30) est configuré comme en particulier un rouleau (31), de préférence commandé, ou comme un jeu de rouleaux avec au moins deux rouleaux (31) opposés l'un à l'autre qui forment une fente.

42. Dispositif selon la revendication 29,
**caractérisé en ce**
**qu'**un dispositif pour étirer le lé en fibres minérales (2) est placé en amont du premier poste de traitement (21), transversalement, en particulier approximativement à angle droit par rapport au sens longitudinal ou au sens de transport.

43. Dispositif selon la revendication 29,
**caractérisé en ce**
**que** le dispositif présente au moins un jeu de rouleaux (33) avec au moins deux rouleaux (34, 35) placés opposés l'un à l'autre qui présentent des profilages sur leurs surfaces d'enveloppe.

44. Dispositif selon la revendication 43,
**caractérisé en ce**
**que** les profilages de rouleaux (34, 35) opposés l'un à l'autre des jeux de rouleaux (33) s'engrènent l'un dans l'autre.

45. Dispositif selon la revendication 43,
**caractérisé en ce**
**que** le profilage d'au moins un rouleau (35) est configuré ondulé.

46. Dispositif selon la revendication 42,
**caractérisé en ce**
**qu'**au moins un cylindre (44), qui est positionné oscillant en particulier par rapport au lé en fibres minérales (2), qui présente de préférence une surface d'enveloppe convexe (43), est placé en aval du dispositif.

47. Elément en matériau isolant, en particulier lé en fibres minérales enroulable (2), constitué par des fibres minérales liées au moins à des liants, de préférence en laine minérale, avec une zone de noyau (49) qui présente de grandes surfaces (8, 18) et deux zones de surfaces qui suivent la zone de noyau (49) des deux côtés dans la zone des grandes surfaces (8, 18), la zone de noyau (49) présentant une allure des fibres minérales substantiellement à angle droit et/ou à angle obtus avec les grandes surfaces (8, 18), tandis que les zones de surface (50) présentent une allure des fibres minérales parallèle aux grandes surfaces (8, 18) et les fibres minérales étant placées nettement étirées dans un sens de traction dans au moins une zone de surface (50).

48. Elément en matériau isolant selon la revendication 47,
**caractérisé en ce**
**qu'**une zone de surface (50), à savoir la zone de surface (50) située à l'extérieur dans le gousset et la seconde zone de surface (50), à savoir la zone de surface (50) située à l'intérieur dans le gousset, est configurée comprimée.

49. Elément en matériau isolant selon la revendication 47,
**caractérisé en ce**
**que** les zones marginales (48) sont configurées étirées dans le sens longitudinal du lé en fibres minérales (2).

50. Elément en matériau isolant selon la revendication 47,
**caractérisé en ce**
**que** des zones en forme de lignes ou de bandes avec une masse volumique apparente élevée, qui sont placées dans le sens longitudinal et/ou transversalement par rapport à celui-ci, sont configurées dans les grandes surfaces (8, 18).

51. Elément en matériau isolant, en particulier intissé primaire (5), constitué par des fibres minérales, de préférence en laine minérale, liées au moins à des liants, avec deux grandes surfaces (8, 18) et des faces latérales (47) orientées à angle droit par rapport à celles-ci, les fibres minérales présentant une allure substantiellement parallèle aux grandes surfaces (8, 18),
**caractérisé en ce**
**que** les fibres minérales sont placées nettement étirées parallèlement et/ou transversalement par rapport au sens longitudinal dans au moins une zone marginale (48) dans le sens longitudinal.

52. Elément en matériau isolant selon la revendication 51,
**caractérisé en ce**
**que** des zones en forme de lignes ou de bandes avec une masse volumique élevée, qui sont placées dans le sens longitudinal et/ou transversalement par rapport à celui-ci, sont configurées dans les grandes surfaces.
